(19) 

**Europäisches Patentamt**
**European Patent Office**
**Office européen des brevets**

(11) **EP 4 277 327 A1**

(12) **EUROPEAN PATENT APPLICATION**
published in accordance with Art. 153(4) EPC

(43) Date of publication:
**15.11.2023 Bulletin 2023/46**

(21) Application number: **22742087.4**

(22) Date of filing: **14.01.2022**

(51) International Patent Classification (IPC):
**H04W 16/28** *(2009.01)*

(52) Cooperative Patent Classification (CPC):
**H04L 5/00; H04W 16/28; H04W 24/10;**
**H04W 72/04; H04W 72/54**

(86) International application number:
**PCT/CN2022/072015**

(87) International publication number:
**WO 2022/156608 (28.07.2022 Gazette 2022/30)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **20.01.2021 CN 202110074812**

(71) Applicant: **Sony Group Corporation**
**Tokyo 108-0075 (JP)**

(72) Inventors:
• **HU, Lirong**
**Nanjing, Jiangsu 211111 (CN)**
• **WU, Zhikun**
**Beijing 100027 (CN)**
• **SUN, Chen**
**Beijing 100027 (CN)**
• **SHENG, Bin**
**Nanjing, Jiangsu 211111 (CN)**

(74) Representative: **D Young & Co LLP**
**120 Holborn**
**London EC1N 2DY (GB)**

(54) **ELECTRONIC DEVICE AND METHOD FOR WIRELESS COMMUNICATION, AND COMPUTER-READABLE STORAGE MEDIUM**

(57) Provided are an electronic device and method for wireless communication, and a computer-readable storage medium. The electronic device comprises: a processing circuit configured for: generating configuration information for an orbital angular momentum modal scanning, the configuration information comprising re- source configuration information of a modal reference signal for the orbital angular momentum modal scanning and reporting configuration information for configuring the reporting of channel state information; and sending the configuration information to a user device.

100

| Generation unit 101 | Communication unit 102 |

**Figure 2**

EP 4 277 327 A1

**Description**

The present application claims priority to Chinese Patent Application No. 202110074812.0, titled "ELECTRONIC DEVICE AND METHOD FOR WIRELESS COMMUNICATION, AND COMPUTER-READABLE STORAGE MEDIUM", filed on January 20, 2021 with the China National Intellectual Property Administration, which is incorporated herein by reference in its entirety.

**FIELD**

The present disclosure relates to the technical field of wireless communications, and in particular to orbital angular momentum (OAM) mode scanning technology. More particularly, the present disclosure relates to an electronic apparatus and a method for wireless communications, and a computer-readable storage medium.

**BACKGROUND**

Electromagnetic waves have both linear momentum and angular momentum. The angular momentum may be decomposed into a spin angular momentum (SAM) and an orbital angular momentum (OAM). The OAM is a result of a change of a phase of the waves relative to an azimuth $\theta$ around a propagation axis of the waves. This change results in a spiral phase distribution ($\phi = l^* \theta$), where 1 represents the mode number of the OAM mode and refers to the number of complete phase rotations within one wavelength.

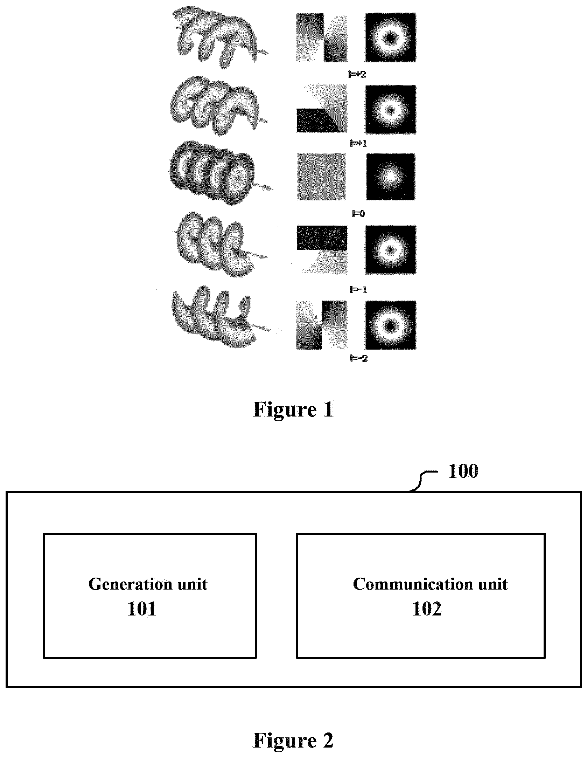

That is, a beam with OAM (referred to as an OAM beam hereinafter) has a spiral phase wave front and a hollow and divergent radiation characteristic. Moreover, the larger the mode number is, the larger the divergence angle is. Figure 1 is a schematic diagram illustrating radiation characteristics of beams with OAM. In conventional RF communications, an emitted beam does not have the OAM, that is, the mode number 1 is equal to 0, resulting in a planar wave front, as illustrated in the middle drawing of Figure 1.

Due to orthogonality between OAM modes with different integer mode numbers, mode division multiplexing (MDM) making use of OAM is considered to be applicable to future wireless communications, which can significantly improve channel capacity without the need of additional frequency bands. Due to an energy radiation characteristic of the OAM beam, it is necessary for an OAM mode of an emitting beam at an emitting end to be matched with an OAM mode of a receiving beam at a receiving end, otherwise receiving quality will be seriously affected. Therefore, in a wireless communication system based on OAM, it is required to perform mode scanning to match the OAM beam at the emitting end and the OAM beam at the receiving end to establish a mode pair link (MPL).

**SUMMARY**

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

According to an aspect of the present disclosure, an electronic apparatus for wireless communications is provided. The electronic apparatus includes processing circuitry. The processing circuitry is configured to: generate configuration information for orbital angular momentum mode scanning, where the configuration information includes resource configuration information for a mode reference signal for the orbital angular momentum mode scanning and reporting configuration information for configuring reporting of channel status information; and transmit the configuration information to user equipment.

According to another aspect of the present disclosure, a method for wireless communications is provided. The method includes: generating configuration information for orbital angular momentum mode scanning, where the configuration information includes resource configuration information for a mode reference signal for the orbital angular momentum scanning and reporting configuration information for configuring reporting of channel status information; and transmitting the configuration information to user equipment.

According to another aspect of the present disclosure, an electronic apparatus for wireless communications is provided. The electronic apparatus includes processing circuitry. The processing circuitry is configured to: receive configuration information for orbital angular momentum mode scanning, where the configuration information includes resource configuration information for a mode reference signal for the orbital angular momentum scanning and reporting configuration information for configuring reporting of channel status information; and measure a beam corresponding to the mode reference signal and report the channel status information based on the configuration information.

According to another aspect of the present disclosure, a method for wireless communications is provided. The method includes: receiving configuration information for orbital angular momentum mode scanning, where the configuration information includes resource configuration information for a mode reference signal for the orbital angular momentum mode scanning and reporting configuration information for configuring reporting of channel status information; and measuring a beam corresponding to the mode reference signal and reporting the channel status information based on the configuration information.

According to the electronic apparatus and the method in the present disclosure, the mode reference signal (Mode-RS) for OAM mode scanning is proposed to enable the OAM mode scanning on the beam on the base station side and the beam on the user equipment side, so as to select an OAM beam with the best communication quality for communication.

According to other aspects of the present disclosure, there are further provided computer program codes and computer program products for implementing the methods for wireless communications above, and a computer-readable storage medium having recorded thereon the computer program codes for implementing the methods for wireless communications described above.

These and other advantages of the present disclosure will be more apparent from the following detailed description of preferred embodiments of the present disclosure in conjunction with the accompanying drawings.

## BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:

Figure 1 is a schematic diagram illustrating radiation characteristics of beams with OAM;

Figure 2 shows a block diagram illustrating functional modules of an electronic apparatus for wireless communications according to an embodiment of the present disclosure;

Figure 3 is a schematic diagram illustrating performing scanning using an OAM beam with a high OAM mode;

Figure 4 is a schematic diagram illustrating performing scanning using an OAM beam with a low OAM mode;

Figure 5 is a schematic diagram illustrating single-mode scanning;

Figure 6 is a schematic diagram illustrating multi-mode scanning;

Figure 7 shows a schematic flowchart of mixed scanning;

Figure 8 is a schematic diagram illustrating wide-beam scanning;

Figure 9 is a schematic diagram illustrating a scheme of the single-mode scanning;

Figure 10 is a schematic diagram illustrating a scheme of the multi-mode scanning;

Figure 11 is a schematic diagram illustrating an information procedure between a base station and UE;

Figure 12 is a schematic diagram illustrating an information procedure between a base station and UE;

Figure 13 is a schematic diagram illustrating narrow-beam scanning;

Figure 14 is a schematic diagram illustrating a scheme of the single-mode scanning;

Figure 15 is a schematic diagram illustrating a scheme of the multi-mode scanning;

Figure 16 illustrates an example of configuration of antenna ports;

Figure 17 illustrates an example of configuration of antenna ports;

Figure 18 shows a block diagram illustrating functional modules of an electronic apparatus for wireless communications according to another embodiment of the present disclosure;

Figure 19 shows a flowchart of a method for wireless communications according to an embodiment of the present disclosure;

Figure 20 shows a flowchart of a method for wireless communications according to another embodiment of the present disclosure;

Figure 21 is a block diagram showing a first example of an exemplary configuration of an eNB or gNB to which the technology of the present disclosure may be applied;

Figure 22 is a block diagram showing a second example of an exemplary configuration of an eNB or gNB to which the technology of the present disclosure may be applied;

Figure 23 is a block diagram showing an example of an exemplary configuration of a smartphone to which the technology according to the present disclosure may be applied;

Figure 24 is a block diagram showing an example of an exemplary configuration of a car navigation apparatus to which the technology according to the present disclosure may be applied; and

Figure 25 is a block diagram of an exemplary block diagram illustrating the structure of a general purpose personal computer capable of realizing the method and/or device and/or system according to the embodiments of the present disclosure.

## DETAILED DESCRIPTION OF EMBODIMENTS

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a service, and these constraints may change as the embodiments differs. Furthermore, it should also be understood that although the development work may be very complicated and time-consuming, for those skilled in the art benefiting from the present disclosure, such development work is only a routine task.
Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

<First Embodiment>

Figure 2 shows a block diagram illustrating functional modules of an electronic apparatus 100 for wireless communications according to an embodiment of the present disclosure. As illustrated in Figure 2, the electronic apparatus 100 includes a generation unit 101 and a communication unit 102. The generation unit 101 is configured to generate configuration information for OAM mode scanning, where the configuration information includes resource configuration information for a mode reference signal for the OAM scanning and reporting configuration information for configuring reporting of channel status information. The communication unit 102 is configured to transmit the configuration information to user equipment (UE).
The generation unit 101 and the communication unit 102 may be implemented by one or more processing circuitries. The processing circuitry may be implemented as, for example, a chip. In addition, it should be understood that various functional units in the apparatus illustrated in Figure 2 are only logical modules divided based on specific functions implemented by these functional units, and are not intended to limit the specific implementations.
The electronic apparatus 100 may be arranged on the base station side/transmit and receive point (TRP) side or communicatively connected to the base station side/TRP. Here it should be further noted that the electronic apparatus 100 may be implemented at a chip level or be implemented at a device level. For example, the electronic apparatus 100 may function as the base station / transmit and receive point itself and further include external apparatuses such as a memory and a transceiver (not illustrated in the drawings). The memory may be configured to store programs required for the base station /transmit and receive point to implement various functions and related data information. The transceiver may include one or more communication interfaces to support communications with different apparatuses (for example, another base station / transmit and receive point, LTE or the like). Implementations of the transceiver are not limited herein.

In this embodiment, the mode reference signal is set for scanning respective OAM modes. The mode reference signal is carried by a beam with a corresponding OAM mode and is transmitted by, for example, a base station/TRP. The UE measures a received mode reference signal to acquire information of communication quality of a corresponding channel, and reports the information to the base station/TRP as the channel status information. It should be noted that the base station is taken as an example in the following description, and the following description is also applicable to TRP.

The resource configuration information includes information of time-frequency resources to be occupied by the mode reference signal, so as to inform the LTE of time-frequency resources on which the UE is to measure the mode reference signal. Due to orthogonality between OAM modes, the generation unit 101 may configure same time-frequency resources for mode reference signals of different OAM modes. The UE may, for example, distinguish different OAM modes through a process of receiving the OAM beam, such as based on hardware. It can be seen that in wireless communications using the OAM modes, it is equivalent to additionally adding a dimension, which significantly improves communication capacity.

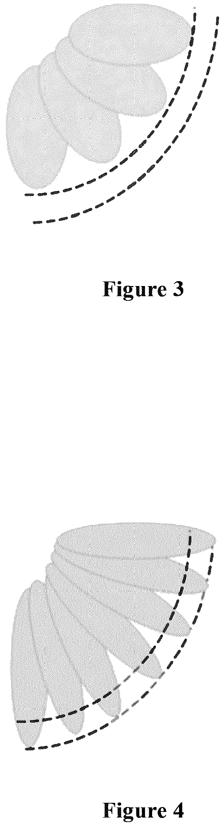

An OAM mode may be defined as a high OAM mode or a low OAM mode based on an absolute value of the mode (for example, the mode number 1 described above). The high OAM mode refers to an OAM mode with a large absolute value of the mode, and the low OAM mode refers to an OAM mode with a small absolute value of the mode. It should be noted that here large and small are relative concepts. OAM beams with different OAM modes are different in beam width and transmission distance. For example, an OAM beam with the high OAM mode has a wide beam width and a short transmission distance, and an OAM beam with the low OAM mode has a narrow beam width and a long transmission distance. Figure 3 illustrates a schematic diagram of performing scanning using an OAM beam with the high OAM mode. Figure 4 illustrates a schematic diagram of performing scanning using an OAM beam with the low OAM mode.

Therefore, the numbers of OAM beams required for covering an area are different for different OAM modes; and emitting power of OAM beams required for reaching the same distance are different for different OAM modes.

Same time-frequency resources may be configured for mode reference signals of different OAM modes in a same beam direction. In order to distinguish OAM beams in space, orthogonal time-frequency resources may be configured for mode reference signals for different beam directions.

A resource type configured for the mode reference signal may be one of being: periodical, semi-persistent and aperiodical, which is similar to a resource type configured for a conventional channel status information reference signal (CSI-RS).

For example, the communication unit 102 is further configured to transmit the mode reference signal and receive the channel status information based on the above mentioned configuration information. The generation unit 101 is further configured to determine one or more OAM beams to be used for data transmission based on the received channel status information, and provide an indication of the determined one or more OAM beams to the UE. In this way, the UE can performs\ receiving using a corresponding OAM beam.

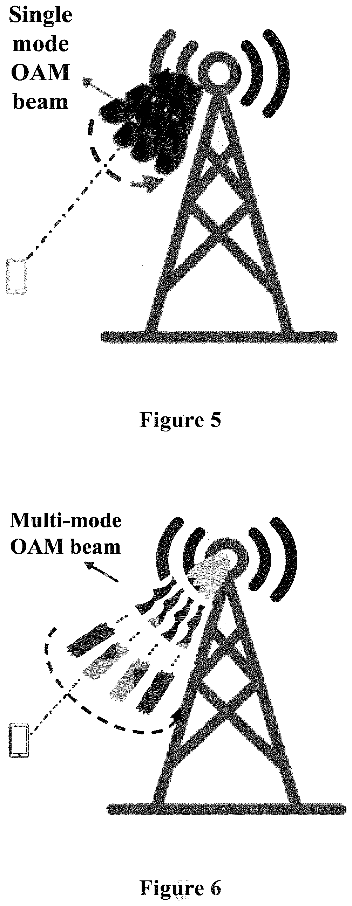

The communication unit 102 may transmit the mode reference signals in one of the following manners: single mode scanning, multi-mode scanning andmixed scanning. In the single mode scanning, mode reference signals of different OAM modes are sequentially transmitted, and OAM beams respectively with different modes may be generated based on respectively designed powers and scanning angles. Figure 5 is a schematic diagram illustrating the single mode scanning. For each direction (four directions are illustrated in the Figure as examples), the base station sequentially transmits single mode OAM beams respectively with different OAM modes to the UE, and each of the single mode OAM beams carries a corresponding mode reference signal. In the multi-mode scanning, for each direction, the base station simultaneously transmits mode reference signals of multiple OAM modes, namely a multi-mode OAM beam, to the UE. The UE first performs demultiplexing on the multi-mode OAM beam upon receiving the multi-mode OAM beam, and then measures a mode reference signal for each mode. Figure 6 is a schematic diagram illustrating the multi-mode scanning.

It should be understood that in a case of a large mode number and a large coverage range, a time period required by the single mode scanning would increases significantly. In addition, implementation of the multi-mode scanning is more complex compared with the single mode scanning, and complexity of the multi-mode scanning is increased with an increase of the mode number. In order to achieve a compromise between the time period required by scanning and complexity of the scanning, mixed scanning is further provided according to this embodiment. In the mixed scanning, mode reference signals of a part of the OAM modes are sequentially transmitted in the manner of single mode scanning, and mode reference signals of remaining OAM modes are simultaneously transmitted in the manner of multi-mode scanning.

For example, in the mixed scanning, mode reference signals of high OAM modes among the respective OAM modes are transmitted in the manner of single mode scanning, and mode reference signals of low OAM modes among the respective OAM modes are transmitted in the manner of multi-mode scanning. The high OAM mode and the low OAM mode may be determined according to a predetermined rule.

As an example, the predetermined rule for determining the high OAM mode and the low OAM mode may include: determining whether an OAM mode is the high OAM mode or the low OAM mode based on whether an absolute value of the mode is higher than a predetermined threshold, or determining the number of the high OAM modes or the number of the low OAM modes according to a predetermined condition. For example, an OAM mode with an absolute value greater than m1 may be determined as the high OAM mode. In addition, the number of the high OAM modes or the number of the low OAM modes may be determined based on limitation on a maximum transmission power and limitation on a scanning time period, so as to further determine which of the OAM modes are the high OAM modes and which of the OAM modes are the low OAM modes.

The communication unit 102 may further be configured to acquire, from the UE, information of capability of the UE being capable of simultaneously receiving beams with different OAM modes. The information, for example, may be used for determining the number of OAM modes included in the multi-mode scanning or the mixed scanning.

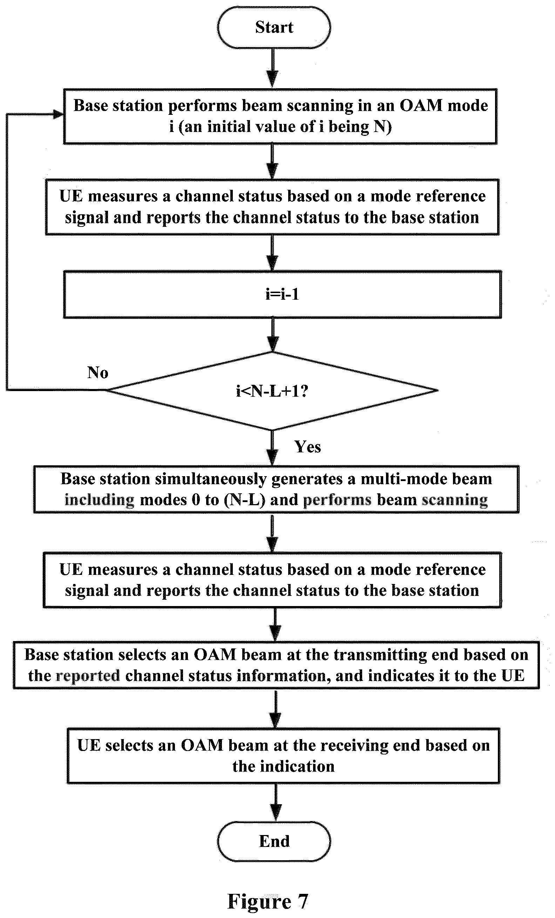

For ease of understanding, Figure 7 shows a schematic flowchart of the mixed scanning. Assuming that the total number of OAM modes is N, L OAM modes with the first L largest absolute values are high OAM modes, and the remaining (N-L) OAM modes are low OAM modes. First, a base station performs single mode beam scanning using an OAM mode i, where an initial value of i is N. LTE measures a mode reference signal and then reports acquired channel status information to the base station. For example, the LTE may report information of a measured optimal mode reference signal. Next, the base station decreases an OAM mode index by 1 and repeats the above operations. When i becomes less than (N-L+1), the base station simultaneously generates a multi-mode beam including modes with mode indexes from 0 to (N-L) and performs beam scanning. The LTE performs demultiplexing on the received multi-mode beam, and measures mode reference signals of respective OAM modes respectively. In this case, the LTE, for example, may report information of an optimal mode reference signal for each OAM mode.

The base station, based on the channel status information reported by the UE, selects an OAM beam for transmission and indicates the OAM beam to the UE. The UE selects a corresponding OAM beam at the receiving end based on the indication.

It should be noted that although the above steps are described by taking the mixed scanning as an example, the steps illustrated in Figure 7, such as reporting by the UE, selecting the OAM beam at the transmitting end by the base station, and selecting the OAM beam at the receiving end by the UE are also applicable to the single mode scanning and the multi-mode scanning, and the steps are not repeated here.

Accordingly, the configuration information may further include an indication of the manner of transmitting the mode reference signal, to indicate whether the mode signal is to be transmitted in the manner of single mode scanning, multi-mode scanning or mixed scanning.

The mode reference signal may be generated based on a CAZAC (constant amplitude zero autocorrelation) sequence such as a Zadoff-Chu sequence, a Frank sequence, a Golomb multiphase sequence and a Chirp sequence. As an example, a Zadoff-Chu sequence with a length of M is expressed as:

$$z_i^u = e^{-j\frac{\pi ui(i+k)}{M}} \quad 0 \leq i < M \cdot$$

In a case that M is an even number, k is equal to 0. In a case that M is an odd number, k is equal to 1, and u is a prime number for M.

It should be understood that the above description is illustrative rather than restrictive.

The above configuration information, for example, may be transmitted to the UE via radio resources control (RRC) signaling. For example, configuration of resources for the mode reference signal may be added in csi-ResourceConfig, and report quantity may be modified in the csi-ReportConfig to indicate newly added measurement content to be reported by the UE (that is, the channel status information to be reported).

In a case of independent networking based on OAM, uplink control information (UCI) signaling may be defined to report the channel status information. The UCI signaling may be transmitted through a physical uplink control channel (PUCCH) or a physical uplink shared channel (PUSCH).

For example, the channel status information to be reported may include one or more OAM-beam resource indicators (ORIs). Each ORI indicates resources of a mode reference signal corresponding to one OAM mode in one beam direction. It should be noted that the resources here further include a dimension of OAM mode. Specifically, in a case that mode reference signals of different OAM modes in a same beam direction are configured with same time-frequency resources, the resources of the mode reference signals corresponding to these different OAM modes are defined to be different. That is, these different OAM modes respectively correspond to different ORIs, so that the base station can distinguish the indicated OAM modes.

The UE measures signal characteristics such as RSRPs or SINRs of the received modal reference signals of respective OAM modes in respective beam directions, to select one or more mode reference signals with the best beam quality, such as one or more mode reference signals with the highest RSRP, and reports an ORI (ORIs) corresponding to the selected one or more mode reference signals to the base station as the channel status information. The base station selects an OAM beam to be used based on the reported ORIs. For example, the base station determines which one (or which ones) among the OAM modes in which one (or which ones) among the beam directions are to be used for data transmission. It should be noted that the OAM mode here includes a zero mode.

In addition, the channel status information to be reported may further include information of beam quality of the beams corresponding to the one or more ORIs measured by the UE. For example, the beam quality may be represented by a reference signal receiving power (RSRP) or a signal to interference and noise ratio (SINR). The information of the beam quality, for example, may be used for beam management.

In addition, the generation unit 101 may further define one antenna port for a mode reference signal of each OAM mode in each beam direction. Each antenna port is equivalent to a channel required to be detected. For example, the ORI in the reported channel status information corresponds to an antenna port number or is represented by an antenna port number.

For example, assuming that there are N beam directions and M OAM modes (non-zero mode), there are [N (zero mode) + N*M] equivalent channels. Antenna ports are respectively configured for the equivalent channels, and the number of required antenna ports is N*(1+M).

In summary, according to the electronic apparatus 100 in this embodiment, the mode reference signal for OAM mode scanning is proposed to enable the OAM mode scanning on the beams on the base station side and the beams on the user equipment side, so as to select an OAM beam with the best communication quality for communication.

<Second Embodiment>

In this embodiment, a case of non-independent networking in which an OAM beam is compatible with 5G is described.

In an example, the communication unit 102 is configured to perform wide-beam scanning using a synchronization signal block (SSB) to determine a target beam direction range, and perform OAM mode scanning within the target beam direction range.

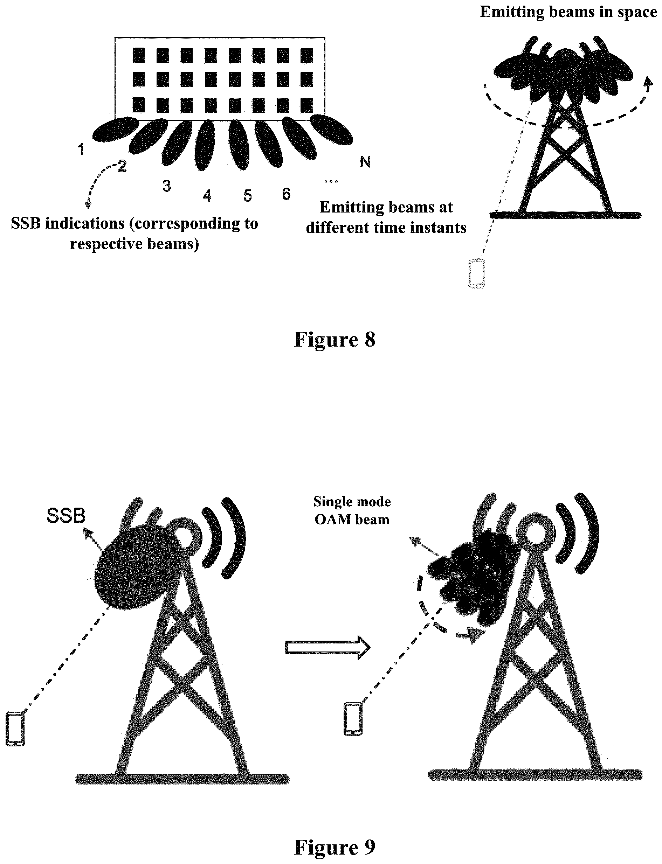

Specifically, the communication unit 102 may transmit SSBs each with a zero mode (i.e., without OAM) in all predefined directions at regular intervals, and scan UE in a space area in a manner of wide-beam scanning, as illustrated in Figure 8. The UE measures signal characteristics such as RSRPs or SINRs of the received SSBs, and identifies indexes corresponding to respective SSBs for reporting. For example, the LTE may report an SSB index of a beam with the best beam quality (for example, with the highest RSRP) to the base station, so that the base station may determine in the coverage of which wide beam the UE is located.

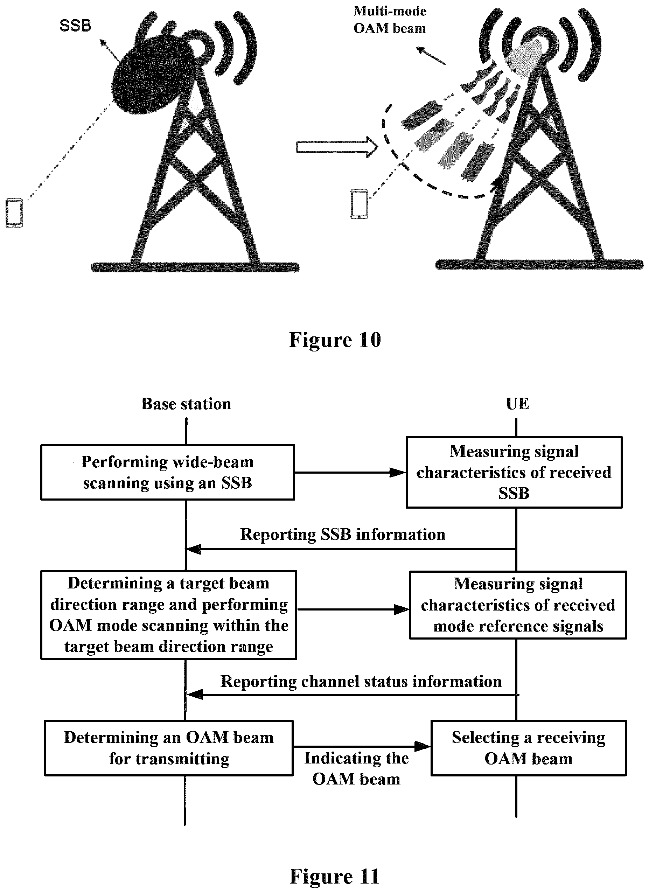

Accordingly, the communication unit 102 acquires the SSB index of the beam with the best beam quality from the UE, and performs OAM mode scanning in multiple beam directions within a range of the SSB beam corresponding to the SSB index, i.e. the target beam direction range. That is, the communication unit 102 transmits mode reference signals of different OAM modes respectively in multiple beam directions. For each beam direction, single mode scanning, multi-mode scanning or mixed scanning may be performed. In order to facilitate understanding, Figure 9 illustrates a schematic diagram of a scheme of the single mode scanning and Figure 10 illustrates a schematic diagram of a scheme of the multi-mode scanning. The mode reference signal transmitted here may include a mode reference signal of the zero mode to be compatible with LTE that cannot receive an OAM beam with non-zero mode.

The UE measures signal characteristics such as RSRPs or SINRs of respective received mode reference signals, and identifies modes and beam directions of respective mode reference signals. For example, the UE may report indication information of one or more mode reference signals with the best beam quality (for example, with the highest RSRP) to the base station as the channel status information. In addition, the LTE may further report information of beam quality corresponding to the one or more mode reference signals. On the other hand, as described above, the LTE may further report information of the capability of LTE being capable of simultaneously receiving different OAM beams (for example, the number of OAM beams which can be simultaneously processed by the UE).

The base station determines one or more OAM beams for data transmission based on the received channel status information and indicates the one or more OAM beams to the UE. The UE selects a receiving OAM beam with a corresponding mode based on the received indication to establish a mode pair link. For ease of understanding, Figure 11 illustrates a schematic diagram of an information procedure between the base station and the UE according to the above description of this example.

In another example, the communication unit 102 performs wide-beam scanning using an SSB and performs narrow-beam scanning using a CSI-RS to determine the target beam direction range, and performs OAM mode scanning within the target beam direction range.

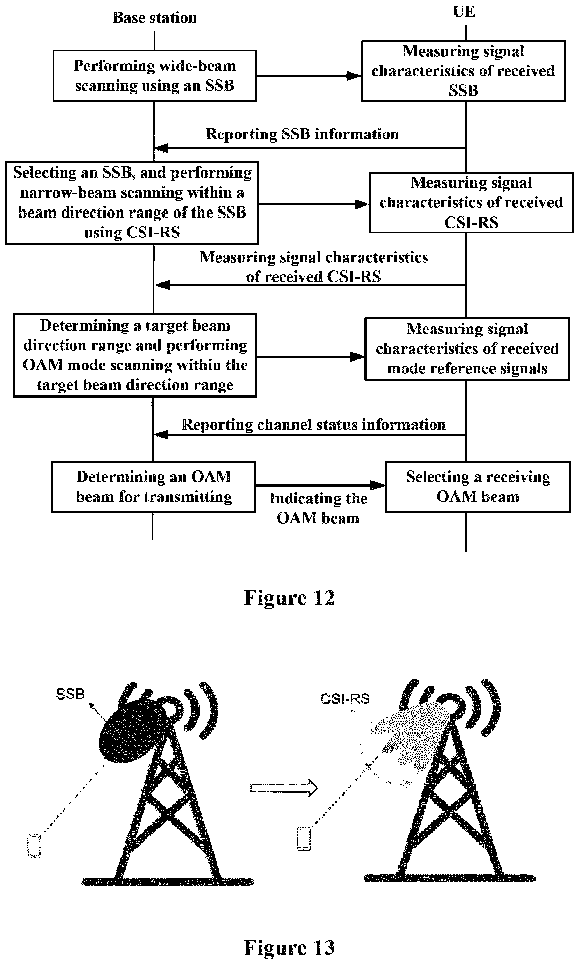

Figure 12 is a schematic diagram illustrating an information procedure between the base station and the UE according to this example. A procedure of performing wide-beam scanning using the SSB and reporting information is the same as the procedure in Figure 11, and the procedure is not repeated here. The communication unit 102, for example, acquires, from the UE, an SSB index of a beam with the best beam quality to determine that the UE is within a coverage range of an SSB beam corresponding to the SSB index, that is, to roughly determine a position of the UE. Next, the communication unit 102 determines multiple CSI-RS beams within the coverage of the SSB beam corresponding to the SSB index, and performs narrow-beam scanning using the multiple CSI-RS beams, as shown in Figure 13. The UE measures signal characteristics such as RSRPs and SINRs of the received CSI-RSs, and identifies indexes corresponding to the respective CSI-RSs for reporting. For example, the UE may report a CSI-RS index of a beam with the best beam quality (for example, with the highest RSRP) to the base station, so that the base station can determine a more particular direction of the UE.

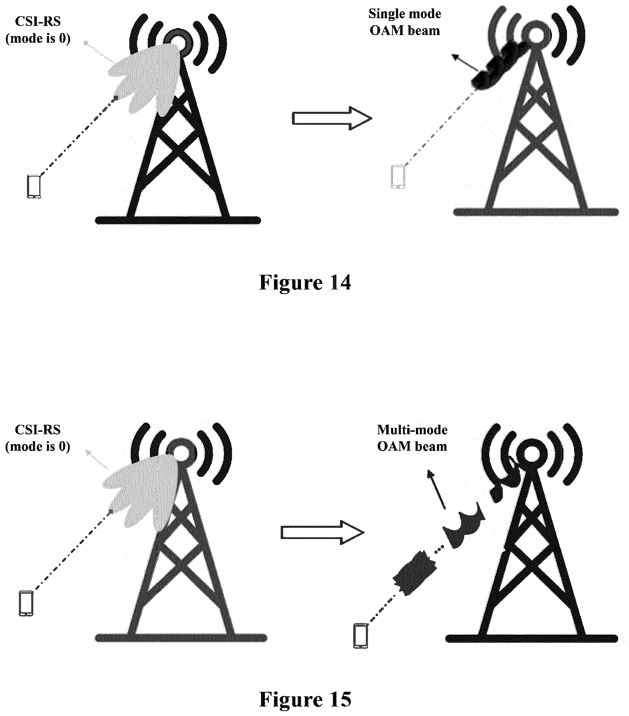

Correspondingly, the communication unit 102 acquires the CSI-RS index of the beam with the best beam quality, and performs OAM mode scanning in the direction of the CSI-RS beam corresponding to the CSI-RS index, that is, transmitting mode reference signals of different OAM modes in the direction of the CSI-RS beam. Single mode scanning, multi-mode scanning or mixed scanning may be performed. In order to facilitate understanding, Figure 14 shows a schematic diagram illustrating a scheme of the single mode scanning and Figure 15 shows a schematic diagram illustrating a scheme of the multi-mode scanning. In addition, although an example of performing OAM mode scanning in the direction of one CSI-RS beam is given here, the example is not restrictive. The communication unit 102 may acquire CSI-RS indexes of multiple beams with the best beam quality and perform OAM mode scanning in directions of the multiple beams.

Similarly, the LTE measures signal characteristics such as RSRPs or SINRs of received respective mode reference signals, and identifies modes and beam directions of the respective mode reference signals. For example, the LTE may report indication information of one or more mode reference signals with the best beam quality (for example, with the highest RSRP) to the base station as the channel status information. In addition, the UE may further report information of beam quality of these mode reference signals. On the other hand, as described above, the UE may further report information of the capability of the UE being capable of simultaneously receiving different OAM beams.

The base station determines one or more OAM beams for data transmission based on the received channel status information and indicates the one or more OAM beams to the UE. The UE selects a receiving OAM beam with a corresponding mode based on the received indication, so as to establish a mode pair link.

In this embodiment, the mode reference signal may be directly generated using a generation sequence of CSI-RS in the 5G NR standard. For example, a mode reference signal sequence may be generated based on a pseudo-random sequence according to upper specified parameters. Then multiplexing is performed using a carefully designed weighting sequence in a time domain and a frequency domain, and scaling is performed using a power scaling factor. Next the sequence is mapped to a group of specific resource elements in a resource grid.

For example, the mode reference signal may make use of a generation sequence the same as that of the CSI-RS. The generation sequence is expressed as follows.

$$r(m) = \frac{1}{\sqrt{2}}(1 - 2c(2m)) + j\frac{1}{\sqrt{2}}(1 - 2c(2m + 1))$$

An initial sequence of c(i) is expressed as follows.

$$c_{init} = (2^{10}(N_{symb}^{slot}n_{s,f}^{\mu} + l + 1)(2n_{ID} + 1) + n_{ID}) \bmod^{31}$$

$n_{ID}$ is assigned by an information element NCP-CSI-RS-Resource->scramblingID or CSI-RS-ResourceConfigMobility-> sequenceGenerationConfig of the RRC signaling.

On the other hand, in this embodiment, after OAM mode scanning is performed, the channel status information reported by the UE to the base station may include one or more extended CSI-RS resource indicators (CRIs). Each of the extended CRIs includes a CRI and an OAM mode index.

In 5G NR, the CRI is an index indicating CSI-RS resources. The CRI is defined as s kind of uplink control information that may be transmitted to the base station through a PUCCH or a PUSCH. Therefore, a CRI in an extended CRI may be used for indicating a direction of a CSI-RS beam (that is, a direction of an OAM beam), and an OAM mode index in the extended CRI may be used for indicating a specific OAM mode. For example, the extended CRI may be an 8-bit field. The first five bits represent a CRI and the last three bits represent a mode index. For example, in an extended CRI 00011010, 00011 represents a CRI and 010 represents a mode index. It should be noted that the above description is only an example, and a specific format of the extended CRI may be modified properly according to actual requirements.

In addition, the reported channel status information may further include information of beam quality of beams corresponding to one or more CRIs measured by the UE.

As described above, due to the orthogonality between OAM modes, mode reference signals of different modes may occupy the same time-frequency resources. In this embodiment, the communication unit 102 may enable the mode reference signal to reuse the time-frequency resources of the CSI-RS, or configure time-frequency resources that are orthogonal to the time-frequency resources of the CSI-RS for the mode reference signal.

In an example where the mode reference signal reuses the time-frequency resources of the CSI-RS, a frame structure of 5G and a pattern of the reference signal may keep unchanged, facilitating the realization of a system. However, due to an imperfect propagation environment, there may be mode migration of the mode reference signal in some cases, which causes interferences to the CSI-RS. In order to reduce the interferences, different resource multiplexing manners may be applied to the mode reference signal and the CSI-RS.

In the 5G NR standard, the CSI-RS is capable of supporting up to 32 different antenna ports, and each of the antenna ports is a channel to be detected. A single-port CSI-RS only occupies one resource element (RE) in one time slot of one resource block. For a multi-port CSI-RS, it may be regarded as that multiple orthogonal signals are multiplexed on a group of resource elements. The multiplexing method generally includes: code domain multiplexing (CDM), frequency domain multiplexing (FDM), or time domain multiplexing (TDM). In CDM, the CSI-RSs of different antenna ports occupy totally the same resource elements and multiplexing modulation is performed through orthogonal codewords. In FDM, the CSI-RSs of different antenna ports respectively occupy different subcarriers in one OFDM symbol. In TDM, the CSI-RSs of different antenna ports respectively occupy different OFDM symbols in a same time slot.

For example, assuming that FDM is applied to the CSI-RS in 5G and an RE uniquely represents a CSI-RS of an antenna port (corresponding to a beam direction), CDM may be applied to the mode reference signals and four REs together represent a mode reference signal of an antenna port (corresponding to a beam direction). In this way, power of the CSI-RS corresponding to a port is different from power of the mode reference signal corresponding to a port in a single RE, so that the UE can distinguish the CSI-RS and the mode reference signal according to the difference in power.

In the example where time-frequency resources orthogonal to the time-frequency resources of the CSI-RS are configured for the mode reference signal, the mode reference signal does not interfere with the CSI-RS regardless of whether there is mode migration.

In a case of introducing the OAM, when the mode reference signals of different modes are transmitted on the channels to be detected corresponding to each CSI-RS, the mode reference signals of different modes will correspond to different equivalent channels respectively, and their corresponding antenna ports are required to be differentiated.

In an example where the mode reference signal reuses the time-frequency resources of the CSI-RS, it is required to distinguish port configurations for different modes on the basis of original antenna ports of the CSI-RS. For example, the antenna port of the mode reference signal may be defined as including a primary antenna port (PAP) and a secondary antenna port (SAP). PAP is used for indicating a beam direction of the mode reference signal, and SAP is used for indicating an OAM mode of the beam of the mode reference signal. For example, PAP may correspond to the CRI in the reported extended CRI, and SAP may correspond to the OAM mode index in the extended CRI, which is hereinafter referred to as scheme 1.

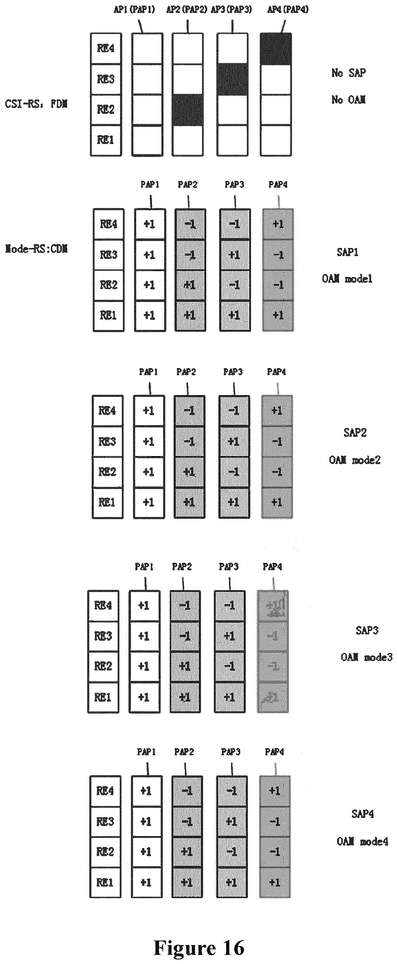

For example, the N-port CSI-RS originally corresponds to N equivalent channels. Assuming that the mode reference signal has M non-zero OAM modes, there are (N (zero mode) + N*M) equivalent channels in total. N PAPs and M SAPs may be configured. Absence of SAP represents zero-mode CSI-RS, and the total number of defined antenna ports is (N+M). With N=4 and M=4, Figure 16 illustrates an example of configuration of the antenna ports. In Figure 16, FDM is applied to the CSI-RS without SAP. CDM is applied to the mode reference signals, and the mode reference signals of different modes have different SAPs, so that there are 4 PAPs and 4 SAP, i.e. 8 antenna ports in total.

In the example where time-frequency resources orthogonal to the time-frequency resources of the CSI-RS are configured for the mode reference signal, the antenna ports may be configured independently for the mode reference signal. For example, one antenna port may be defined for the mode reference signal of each OAM mode in each beam direction. The CRI and the OAM mode index in the extended CRI together correspond to an antenna port number, which is hereinafter referred to as scheme 2.

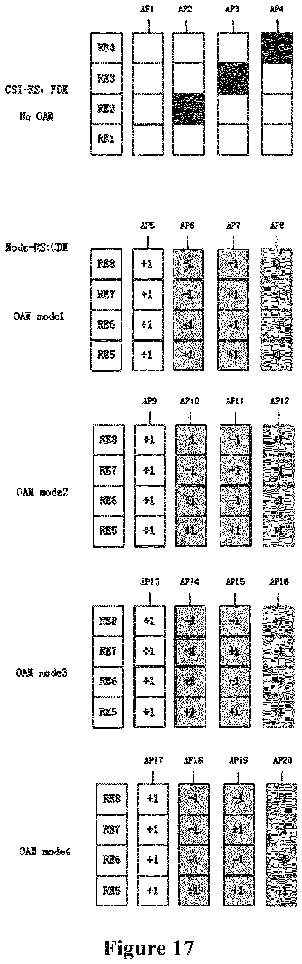

For example, the N-port CSI-RS originally corresponds to N equivalent channels. Assuming that the mode reference signal has M non-zero OAM modes, there are (N (zero mode) + N*M) equivalent channels in total. One antenna port is configured for each of the equivalent channels, a total number of required antenna ports is N*(1+M). Still with N=4 and M=4, Figure 17 illustrates an example of configuration of the antenna ports. In Figure 17, the CSI-RS without OAM requires four antenna ports AP1 to AP4. For each OAM mode, in each of the four beam directions, the mode reference signal requires four antenna ports respectively, namely AP5 to AP8, AP9 to AP12, AP13 to AP16 and AP17 to AP20, that is, 20 antenna ports in total.

For convenience of explanation, the two schemes are compared in time-frequency resource occupation and antenna port configuration relation, as shown in Table 1 below.

| Scheme 1 | Time-frequency resource (RE) | Antenna port (AP) | Number of equivalent channels |
|---|---|---|---|
| CSI-RS | N | N | N |
| Mode reference signal | N (original) | N+M | N*M |
| Total | N | N+M | N*(1+M) |
| Scheme 2 | Time-frequency resource (RE) | Antenna port (AP) | Number of equivalent channels |
| CSI-RS | N | N | N |
| Mode reference signal | N (newly added) | N*M | N*M |
| Total | 2N | N+N*M | N*(1+M) |
| Table 1: comparison of two schemes in time-frequency resource occupation and antenna port configuration | | | |

It should be understood that the above examples are only illustrative rather than restrictive.

In summary, according to the electronic apparatus 100 in this embodiment, a solution under a condition that the OAM mode scanning is compatible with 5G NR is provided to enable to perform OAM mode scanning on the beam on the base station side and on the beam on the user equipment side, so as to select an OAM beam with the best communication quality for communication.

It should be noted that in this embodiment and the first embodiment, a case that the OAM beam is applied to a mobile communication scenario where the base station communicates with the LTE is described as an example. However, the example is not restrictive. The OAM beam may further be applied to other various scenarios, such as a device-to-device (D2D) communication scenario, and a vehicle to X (V2X) communication scenario. Two simple examples are described below.

D2D Application Scenario

D2D communication is a technology proposed by 3GPP. In D2D communication, terminals are allowed to directly communicate with each other using cell resources without a network infrastructure under the control of a communication system. D2D communication may be performed in a licensed frequency band and provide an environment with controllable interferences.

After a D2D communication link is established, data transmission does not require intervention of a core apparatus or an intermediate apparatus, which reduces a pressure on a core network of the communication system, greatly improves spectrum utilization and throughput, and expands network capacity. In addition, D2D communication has various benefits of: improving quality of service (QoS) of a wireless network, improving robustness of a network infrastructure, reducing consumption of a battery, and providing a point-to-point data transmission service in a certain area.

D2D technology is applicable to a mobile cellular network. Each D2D communication link occupies the same resources as a cellular communication link. A D2D user shares cell resources with a cellular user. Channel resources allocated to the D2D user may be idle resources or multiplex resources. The idle resources refer to a channel that is orthogonal to channels occupied by cellular users in communication. The multiplex resources refer to a channel the same as the channel being occupied by a cellular user in communication. One of the main problems of D2D communication is the interferences caused by resource multiplex. Therefore, the base station is required to control frequency resources and transmission power of D2D communication to ensure that the interferences of D2D communication introduced to the existing communication of the cell are within an acceptable range.

In the case of introducing the OAM beam, due to the orthogonality between OAM modes, channels respectively corresponding to different modes are orthogonal to each other, thereby greatly increasing the amount of available cell resources. On the one hand, the introduction of the OAM beam provides more choices for the cellular user to reduce the amount of channel resources originally occupied by the cellular user, so that the D2D user is more likely to use idle resources, ensuring a maximum transmission power for D2D communication, thereby improving communication quality. On the other hand, in a case that the base station determines to allocate multiplexing resources for the D2D user, communication is performed using different OAM modes, which reduces interferences on the D2D user and the cellular user who reuse the same resources.

A base station, after detecting a D2D apparatus initiating a session request, is required to determine whether a D2D connection can be established according to a certain strategy. Similar to mobile communication, establishment of the D2D communication link requires the OAM mode scanning. For example, the base station transmits control signaling to command UEs at both ends of D2D communication to transmit a detection signal to each other. For different resource blocks of different OAM modes, the UE measures interferences between the UEs and measures equivalent OAM channel quality. The UE reports the measured channel status information to the base station. The base station schedule resources based on the measured information. The base station determines an OAM mode and transmission power for transmission, and notifies the LTE to establish a D2D connection through control signaling. The D2D communication link is established successfully. For each of the UEs at both ends, the UE directly transmits data using an IP address of the other UE. The electronic apparatus 100 according to the first embodiment and this embodiment may be arranged in the base station. Part of functions of the electronic apparatus 100 such as transmitting an OAM beam carrying a mode reference signal to other UE in the D2D communication, may be realized by one of the UEs in the D2D communication.

V2X Application Scenario

V2X means vehicle to everything, and refers to that the vehicle exchanges information with outside. V2X is a general name of a series of vehicle wireless communication technologies such as vehicle to pedestrian (V2P) communication, vehicle to vehicle (V2V) communication, vehicle to infrastructure (V2I) communication, and vehicle to network (V2N) communication.

V2X is a key technology of a future intelligent transportation system. With the V2X technology, communication between vehicles, communication between a vehicle and a base station, and communication between base stations can be realized, so as to obtain a series of traffic information such as real-time road conditions, road information, and pedestrian information, thereby improving driving safety, reducing congestion, improving traffic efficiency, and providing on-vehicle entertainment information.

In a case of introducing the OAM beam, due to the orthogonality between OAM modes, channels respectively corresponding to different modes are orthogonal to each other, which may be used for distinguish vehicles or scenarios, so as to minimize interferences and ensure accuracy of information.

For example, a vehicle may first establish a connection with a network side through OAM mode scanning, and then information is exchanged between vehicles using remaining OAM modes. Similarly, the electronic apparatus 100 according to the first embodiment and this embodiment may be arranged on the network side.

As shown in Table 2 below, vehicles A, B and C running on a same road may communicate with a base station respectively through different OAM modes. For each of the vehicles, an OAM mode for V2V communication may be different from an OAM mode for V2N communication.

Table 2 Example of Use of OAM Modes in V2X

|  | Vehicle A | Vehicle B | Vehicle C |
|---|---|---|---|
| Vehicle A |  | Mode 1 | Mode 2 |
| Vehicle B | Mode 1 |  | Mode 3 |
| Vehicle C | Mode 2 | Mode 3 |  |
| Network | Mode 3 | Mode 2 | Mode 1 |

<Third Embodiment>

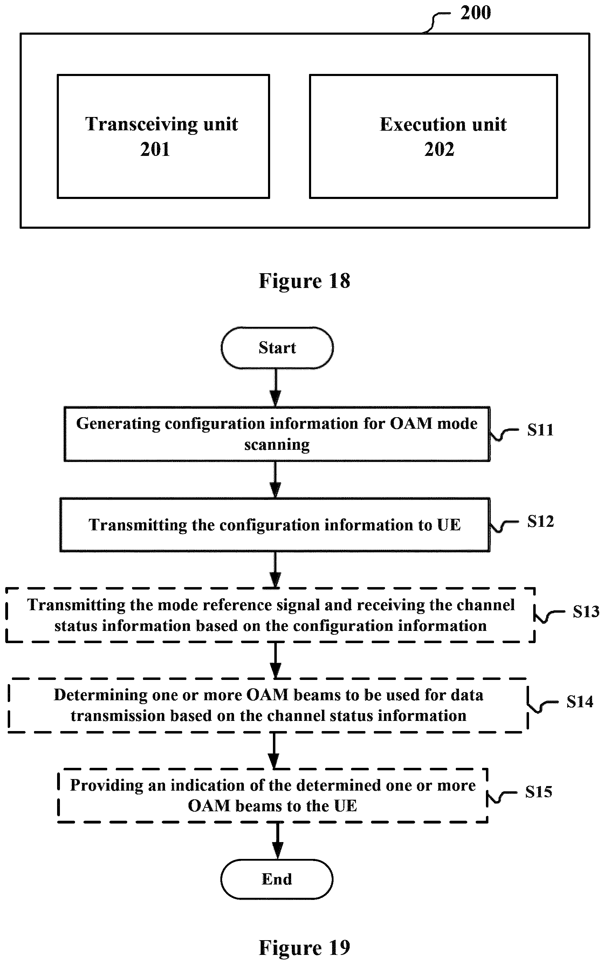

Figure 18 shows a block diagram illustrating functional modules of an electronic apparatus 200 for wireless communications according to another embodiment of the present disclosure. As illustrated in Figure 18, the electronic apparatus 200 includes a transceiving unit 201 and an execution unit 202. The transceiving unit 201 is configured to receive configuration information for OAM mode scanning, where the configuration information includes resource configuration information for a mode reference signal for the OAM scanning and reporting configuration information for configuring reporting of channel status information. The execution unit 202 is configured to measure a beam corresponding to the mode reference signal based on the configuration information. The transceiving unit 201 is further configured to report the channel status information.

The transceiving unit 201 and the execution unit 202 may be implemented by one or more processing circuitries. The processing circuitry may be implemented as, for example, a chip. In addition, it should be understood that various functional units in the apparatus illustrated in Figure 18 are only logical modules divided based on specific functions implemented by these functional units, and are not intended to limit the specific implementations.

The electronic apparatus 200 may be arranged on a UE side or communicatively connected to UE. Here it should be further noted that the electronic apparatus 200 may be implemented at a chip level or be implemented at a device level. For example, the electronic apparatus 200 may function as the UE itself and further include external apparatuses such as a memory and a transceiver (not illustrated in the drawings). The memory may be configured to store programs required for the UE to implement various functions and related data information. The transceiver may include one or more communication interfaces to support communications with different apparatuses (for example, a base station, other UE or the like). Implementations of the transceiver are not limited herein.

The electronic apparatus 200 according to this embodiment enables the LTE to perform OAM mode scanning based on the configuration information from the base station. For example, the UE measures and reports the beam quality of the OAM beam transmitted by the base station, so that the base station determines, based on a reported result, a transmitting OAM beam or a transmitting-receiving OAM beam pair to be used for data transmission.

As described above, the OAM beam carries the mode reference signal. The UE measures the received mode reference signal to acquire the information of the communication quality of a corresponding channel, and reports the information to the base station as the channel status information.

The resource configuration information includes information of time-frequency resources to be occupied by the mode reference signal, and the LTE may determine, based on the information, time-frequency resources on which the UE measures the mode reference signal. Due to the orthogonality between OAM modes, mode reference signals of different OAM modes may be configured with the same time-frequency resources. The LTE may, for example, distinguish different OAM modes through a process of receiving the OAM beam based on hardware. Therefore, in wireless communications using the OAM mode, it is equivalent to additionally adding a dimension, which can significantly improve the communication capacity.

In a case of independent networking based on OAM, mode reference signals of different OAM modes in a same beam direction are configured to occupy the same time-frequency resources, and mode reference signals in different beam directions are configured to occupy time-frequency resources orthogonal to each other.

In a case of non-independent networking in which an OAM beam is compatible with 5G, the mode reference signal may reuse the time-frequency resources of the CSI-RS. However, in order to avoid interferences of the mode reference signal to the CSI-RS due to mode migration, different resource multiplexing manners may be applied to the mode reference signal and the CSI-RS. In addition, the mode reference signal may occupy time-frequency resources orthogonal to the time-frequency resources occupied by the CSI-RS, which is described in detail in the second embodiment and is not repeated here.

Similar to the first embodiment, a resource type configured for the mode reference signal may be one of being: periodical, semi-persistent and aperiodical.

In addition, the configuration information may further include indication of a manner of transmitting the mode reference signal. The mode reference signal may be transmitted in a manner of single mode scanning, multi-mode scanning, or mixed scanning. In the single mode scanning, mode reference signals of different OAM modes are sequentially transmitted. In the multi-mode scanning, mode reference signals of respective OAM modes are simultaneously transmitted. In the mixed scanning, mode reference signals of a part of OAM modes are sequentially transmitted in a manner of single-mode scanning, and mode reference signals of remaining OAM modes are simultaneously transmitted in a manner of multi-mode scanning.

In a case that the base station transmits the mode reference signals in a manner of multi-mode scanning, the transceiving unit 201 is configured to perform demultiplexing on a received beam and measure, for each OAM mode, a beam corresponding to a mode reference signal of the OAM mode. The transceiving unit 201 is further configured to report, to the base station, information indicating capability of the UE being capable of simultaneously receiving different OAM beams, so that the base station can properly set the number of OAM modes when performing multi-mode scanning.

In a case of independent networking based on OAM, the channel status information reported by the transceiving unit 201 may include one or more OAM beam resource indicators (ORIs). Each ORI represents resources of a mode reference signal corresponding to one OAM mode in one beam direction. It should be noted that the resources here further include a dimension of OAM mode. For example, the transceiving unit 201 may report, to the base station, ORIs of M OAM beams with the first M highest RSRP measured by the execution unit 202. M may be specified by upper layer signaling, and is greater than or equal to 1. In addition, the reported channel status information may further include information of beam quality of the beams corresponding to the M ORIs measured by the execution unit 202. The beam quality, for example, may be presented by RSRP or SINR.

In a case of non-independent networking in which an OAM beam is compatible with 5G, the channel status information reported by the transceiving unit 201 may include one or more extended CRIs. Each extended CRI includes a CRI and an OAM mode index respectively indicating a beam direction and an OAM mode. Similarly, the transceiving unit 201 may report, to the base station, the extended CRIs of M OAM beams with the first M highest RSRP measured by the execution unit 202. M may be specified by the upper layer signaling, and M is greater than or equal to 1. In addition, the reported channel status information may further include information of beam quality of the beams corresponding to the M extended CRIs measured by the execution unit 202.

After the base station determines one or more OAM beams to be used for data transmission, the transceiving unit 201 is further configured to acquire an indication of the one or more OAM beams from the base station. The execution unit 202 selects a receiving OAM beam for receiving the one or more OAM beams to form a mode link pair.

As an application example, the electronic apparatus 200 may be located in first user equipment in D2D communication, and the beam corresponding to the mode reference signal is transmitted by second user equipment other than the first user equipment in the D2D communication.

As another application example, the electronic apparatus 200 may be located in a vehicle, and the execution unit 202 is configured to communicate with a base station and another vehicle using beams with different orbital angular momentum modes respectively. The D2D communication scenario and the V2X communication scenario are described in detail in the second embodiment, which are not repeated here.

In summary, according to the electronic apparatus 200 in this embodiment, the mode reference signal for OAM mode scanning is proposed to enable to perform OAM mode scanning on the beam on the base station side and on the beam on the user equipment side, so as to select an OAM beam with the best communication quality for communication.

<Fourth Embodiment>

In the above description of embodiments of the electronic apparatuses for wireless communications, it is apparent that some processing and methods are further disclosed. In the following, a summary of the methods are described without repeating details that are described above. However, it should be noted that although the methods are disclosed when describing the electronic apparatuses for wireless communications, the methods are unnecessary to adopt those components or to be performed by those components described above. For example, implementations of the electronic apparatuses for wireless communications may be partially or completely implemented by hardware and/or firmware. Methods for wireless communications to be discussed blow may be completely implemented by computer executable programs, although these methods may be implemented by the hardware and/or firmware for implementing the electronic apparatuses for wireless communications.

Figure 19 illustrates a flowchart of a method for wireless communications according to an embodiment of the present disclosure. The method includes: generating configuration information for OAM mode scanning, where the configuration information includes resource configuration information for a mode reference signal for the OAM scanning and reporting configuration information for configuring reporting of channel status information (S11); and transmitting the configuration information to UE (S12). The method, for example, may be performed on a base station/TRP side.

As illustrated in a dashed line block in Figure 19, the method may further include step S13: transmitting the mode reference signal and receiving the channel status information based on the configuration information, where the mode reference signal is carried by a beam with a corresponding OAM mode. A resource type configured for the mode reference signal may be one of being periodical, semi-persistent and aperiodical.

For example, the mode reference signal may be transmitted in a manner of single mode scanning, multi-mode scanning or mixed scanning. In the single mode scanning, the mode reference signals of different OAM modes are sequentially transmitted. In the multi-mode scanning, mode reference signals of respective OAM modes are simultaneously transmitted. In the mixed scanning, mode reference signals of a part of the OAM modes are sequentially transmitted in a manner of single mode scanning, and mode reference signals of remaining OAM modes are simultaneously transmitted in a manner of multi-mode scanning. In the mixed scanning, a mode reference signal of a high OAM mode in respective OAM modes is transmitted in a manner of single mode scanning, and a mode reference signal of a low OAM mode in respective OAM modes is transmitted in a manner of multi-mode scanning. The high OAM mode and the low OAM mode are determined according to a predetermined rule. The predetermined rule, for example, includes determining whether an OAM mode is the high OAM mode or the low OAM mode based on whether an absolute value of the mode is higher than a predetermined threshold, or determining the number of the high OAM modes or the number of the low OAM modes according to a predetermined condition. The configuration information may further include an indication of the manner of transmitting the mode reference signal.

In a case of non-independent networking in which an OAM beam is compatible with 5G, wide-beam scanning may be performed using an SSB to determine a target beam direction range. Alternatively, wide-beam scanning is performed using an SSB and narrow-beam scanning is performed using a CSI-RS, to determine a target beam direction range. OAM mode scanning is performed within the target beam direction range.

For example, an SSB index of a beam with the best beam quality may be acquired from the UE, and OAM mode scanning is performed in multiple beam directions within a range of an SSB beam corresponding to the SSB index. Alternatively, an SSB index of a beam with the best beam quality is acquired from the LTE, multiple CSI-RS beams within a range of an SSB beam corresponding to the SSB index are determined, narrow-beam scanning is performed using the multiple CSI-RS beams to obtain a CSI-RS index of a beam with the best beam quality, and OAM mode scanning is performed in a direction of the CSI-RS beam corresponding to the CSI-RS index.

The channel status information to be reported may include one or more OAM beam resource indicators (ORIs) or include one or more extended CRIs. Each ORI represents resources of a mode reference signal corresponding to one OAM mode in one beam direction. Each extended CRI includes a CRI and an OAM mode index. In addition, the channel status information to be reported further includes information of beam quality of beams corresponding to the one or more ORIs or corresponding to the one or more extended CRIs measured by the LTE. The beam quality, for example, is represented by RSRP or SINR.

Information indicating capability of the LTE of being capable of simultaneously receiving different OAM beams may further be acquired from the UE.

As illustrated in the dashed line blocks in Figure 19, the method may further include: determining one or more OAM beams to be used for data transmission based on the channel status information (S14); and providing an indication of the determined one or more OAM beams to the UE (S15).

Due to orthogonality between OAM modes, mode reference signals of different OAM modes in a same beam direction may be configured with same time-frequency resources, and mode reference signals in different beam directions may be configured with time-frequency resources orthogonal to each other. In a case of non-independent networking in which an OAM beam is compatible with 5G, time and frequency resources of the CSI-RS may be reused by the mode reference signal. For example, different resource multiplexing manners may be applied to the mode reference signal and the CSI-RS to reduce interferences.

An antenna port of the mode reference signal may be defined as including a primary antenna port and a secondary antenna port. The primary antenna port is configured to indicate a beam direction of the mode reference signal. The secondary antenna port is configured to indicate an OAM mode of a beam corresponding to the mode reference signal.

Apparently, time-frequency resource orthogonal to the time-frequency resource of the CSI-RS may be configured for the mode reference signal. One antenna port may be defined for a mode reference signal of each OAM mode in each beam direction.

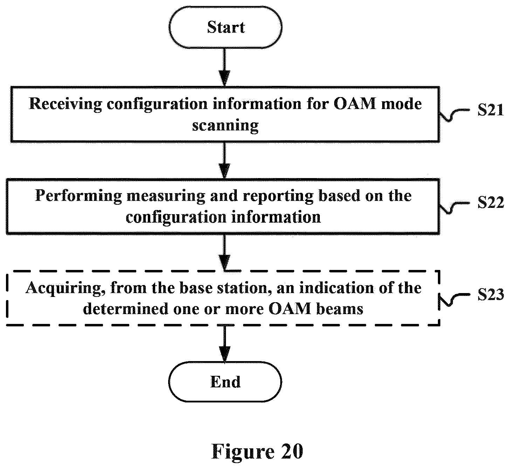

Figure 20 illustrates a flowchart of a method for wireless communications according to an embodiment of the present disclosure. The method includes: receiving configuration information for OAM mode scanning, where the configuration information includes resource configuration information for a mode reference signal for the OAM mode scanning and reporting configuration information for configuring reporting of channel status information (S21); and measuring a beam corresponding to the mode reference signal and reporting the channel status information based on the configuration information (S22). The method, for example, may be performed on a UE side.

Similarly, a resource type configured for the mode reference signal may be one of being periodical, semi-persistent and aperiodical.

The configuration information may further include an indication of a manner of transmitting the mode reference signal. The mode reference signal may be transmitted in a manner of single mode scanning, multi-mode scanning or mixed scanning. In the single mode scanning, the mode reference signals of different OAM modes are sequentially transmitted. In the multi-mode scanning, mode reference signals of respective OAM modes are simultaneously transmitted. In the mixed scanning, mode reference signals of a part of the OAM modes are sequentially transmitted in a manner of single-mode scanning, and mode reference signals of remaining OAM modes are simultaneously transmitted in a manner of multi-mode scanning.

In a case that the base station transmits the mode reference signal in a manner of multi-mode scanning, the LTE performs demultiplexing on a received beam and measures, for each OAM mode, a beam corresponding to a mode reference signal.

For example, the reported channel status information may include one or more (ORIs) or include one or more extended CRIs. Each ORI represents resources of a mode reference signal corresponding to one OAM mode in one beam direction. Each extended CRI includes a CRI and an OAM mode index. In addition, the reported channel status information may further include measured information of beam quality of a beam corresponding to the one or more ORIs or corresponding to the one or more extended CRIs. The beam quality, for example, is represented by RSRP or SINR. In addition, information of capability of the UE being capable of simultaneously receiving different OAM beams may further be reported to the base station.

Due to orthogonality between OAM modes, mode reference signals of different OAM modes in a same beam direction may be configured to occupy same time-frequency resources, and mode reference signals in different beam directions may be configured to occupy time-frequency resources orthogonal to each other.

In a case of non-independent networking in which an OAM beam is compatible with 5G, time and frequency resources of the CSI-RS may be reused by the mode reference signal. For example, different resource multiplexing manners may be applied to the mode reference signal and the CSI-RS to reduce interferences. Alternatively, the mode reference signal may occupy time-frequency resources orthogonal to the time-frequency resources of the CSI-RS.

In addition, as illustrated in the dashed line block in Figure 20, the method further includes step S23: acquiring, from the base station, an indication of one or more OAM beams to be used for data transmission.

The methods described above respectively correspond to the electronic apparatus 100 described in the first embodiment and the second embodiment and the electronic apparatus 200 described in the third embodiment. For details of the methods, one may refer to the above descriptions of the apparatuses, and the details are not repeated here. It should be noted that the methods may be performed together or separately.

The technology of the present disclosure is applicable to various products.

The electronic apparatus 100 may be implemented as various types of base stations or TRPs. The base stations may be implemented as any type of evolved node B (eNB) or gNB (5G base station). The eNB includes a macro eNB and a small eNB, for example. The small eNB may be an eNB such as a pico eNB, a micro eNB and a home (femto) eNB that covers a cell smaller than a macro cell. The situation is similar to the gNB. Alternatively, the base station may also be implemented as a base station of any other type, such as a NodeB and a base transceiver station (BTS). The base station may include a main body (that is also referred to as a base station device) configured to control wireless communications, and one or more remote radio heads (RRH) arranged in a different place from the main body. In addition, various types of user equipment each may operate as the base station by performing functions of the base station temporarily or semi-permanently.

For example, the electronic apparatus 200 may be implemented as various types of user equipment. The user equipment may be implemented as a mobile terminal (such as a smartphone, a tablet personal computer (PC), a notebook PC, a portable game terminal, a portable/dongle type mobile router, and a digital camera), or an in-vehicle terminal (such as a car navigation device). The user equipment may also be implemented as a terminal (that is also referred to as a machine type communication (MTC) terminal) that performs machine-to-machine (M2M) communication. Furthermore, the user equipment may be a wireless communication module (such as an integrated circuit module including a single die) mounted on each of the terminals.

[Application Examples Regarding a Base Station]

(First Application Example)

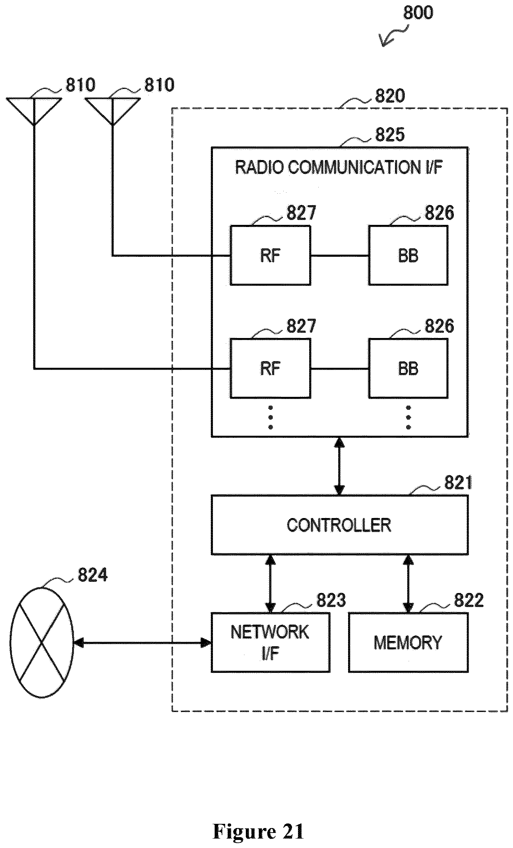

Figure 21 is a block diagram illustrating a first example of an exemplary configuration of an eNB or gNB to which the technology according to the present disclosure may be applied. It should be noted that the following description is given by taking the eNB as an example, which is also applicable to the gNB. An eNB 800 includes one or more antennas 810 and a base station apparatus 820. The base station apparatus 820 and each of the antennas 810 may be connected to each other via a radio frequency (RF) cable.

Each of the antennas 810 includes a single or multiple antennal elements (such as multiple antenna elements included in a multiple-input multiple-output (MIMO) antenna), and is used for the base station apparatus 820 to transmit and receive wireless signals. As illustrated in Figure 21, the eNB 800 may include the multiple antennas 810. For example, the multiple antennas 810 may be compatible with multiple frequency bands used by the eNB 800. Although Figure 21 illustrates the example in which the eNB 800 includes the multiple antennas 810, the eNB 800 may include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as resource control, radio bearer control, mobility management, admission control and scheduling. The control may be performed in corporation with an eNB or a core network node in the vicinity. The memory 822 includes a RAM and a ROM, and stores a program executed by the controller 821 and various types of control data (such as a terminal list, transmission power data and scheduling data).

The network interface 823 is a communication interface for connecting the base station apparatus 820 to a core network 824. The controller 821 may communicate with a core network node or another eNB via the network interface 823. In this case, the eNB 800, and the core network node or another eNB may be connected to each other via a logic interface (such as an S1 interface and an X2 interface). The network interface 823 may also be a wired communication interface or a wireless communication interface for wireless backhaul. In a case that the network interface 823 is a wireless communication interface, the network interface 823 may use a higher frequency band for wireless communication than that used by the radio communication interface 825.

The radio communication interface 825 supports any cellular communication scheme (such as Long Term Evolution (LTE) and LTE-advanced), and provides wireless connection to a terminal located in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and perform various types of signal processing of layers (such as L1, Media Access Control (MAC), Radio Link Control (RLC), and a Packet Data Convergence Protocol (PDCP)). The BB processor 826 may have a part or all of the above-described logical functions, to replace the controller 821. The BB processor 826 may be a memory storing communication control programs, or a module including a processor and a related circuit configured to execute the programs. Updating the program may allow the functions of the BB processor 826 to be changed. The module may be a card or a blade inserted into a slot of the base station apparatus 820. Alternatively, the module may be a chip mounted on the card or the blade. Meanwhile, the RF circuit 827 may include, for example, a mixer, a filter, and an amplifier, and transmits and receives wireless signals via the antenna 810.

As illustrated in Figure 21, the radio communication interface 825 may include multiple BB processors 826. For example, the multiple BB processors 826 may be compatible with multiple frequency bands used by the eNB 800. The radio communication interface 825 may include multiple RF circuits 827, as illustrated in Figure 21. For example, the multiple RF circuits 827 may be compatible with multiple antenna elements. Although Figure 21 illustrates the example in which the radio communication interface 825 includes multiple BB processors 826 and multiple RF circuits 827, the radio communication interface 825 may include a single BB processor 826 and a single RF circuit 827.

In the eNB 800 illustrated in Figure 21, the communication unit 102 and the transceiver of the electronic apparatus 100 may be implemented by the radio communication interface 825. At least a part of functions may be implemented by the controller 821. For example, the controller 821 can transmit the configuration information for OAM mode scanning by performing functions of the generation unit 101 and the communication unit 102, and further to perform OAM mode scanning, thereby selecting an OAM beam with the best communication quality for data transmission.

(Second Application Example)

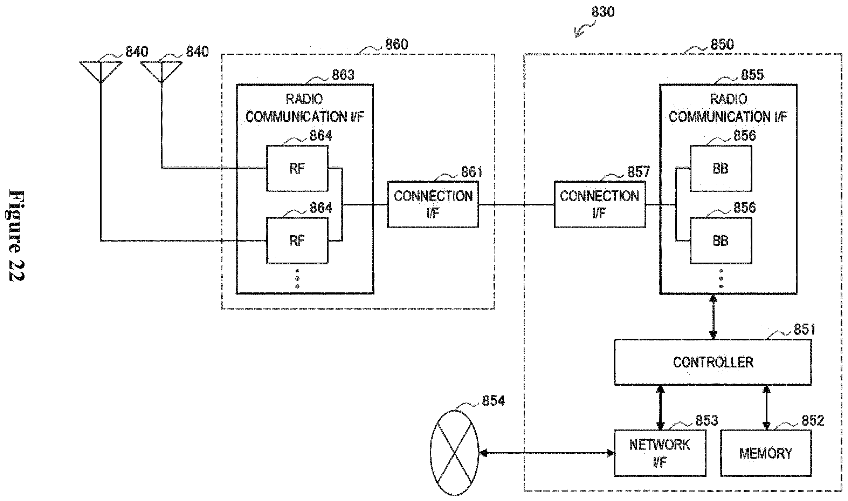

Figure 22 is a block diagram illustrating a second example of an exemplary configuration of an eNB or gNB to which the technology according to the present disclosure may be applied. It should be noted that the following description is given by taking the eNB as an example, which is also applied to the gNB. An eNB 830 includes one or more antennas 840, a base station apparatus 850, and an RRH 860. The RRH 860 and each of the antennas 840 may be connected to each other via an RF cable. The base station apparatus 850 and the RRH 860 may be connected to each other via a high speed line such as an optical fiber cable.

Each of the antennas 840 includes a single or multiple antennal elements (such as multiple antenna elements included in an MIMO antenna), and is used for the RRH 860 to transmit and receive wireless signals. As illustrated in Figure 22, the eNB 830 may include multiple antennas 840. For example, the multiple antennas 840 may be compatible with multiple frequency bands used by the eNB 830. Although Figure 22 illustrates the example in which the eNB 830 includes multiple antennas 840, the eNB 830 may include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 21.

The radio communication interface 855 supports any cellular communication scheme (such as LTE and LTE-advanced), and provides wireless communication to a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 21, except that the BB processor 856 is connected to an RF circuit 864 of the RRH 860 via the connection interface 857. As illustrated in Figure 22, the radio communication interface 855 may include multiple BB processors 856. For example, the multiple BB processors 856 may be compatible with multiple frequency bands used by the eNB 830. Although Figure 22 illustrates the example in which the radio communication interface 855 includes multiple BB processors 856, the radio communication interface 855 may include a single BB processor 856.

The connection interface 857 is an interface for connecting the base station apparatus 850 (radio communication interface 855) to the RRH 860. The connection interface 857 may also be a communication module for communication in the above-described high speed line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high speed line.

The radio communication interface 863 transmits and receives wireless signals via the antenna 840. The radio communication interface 863 may typically include, for example, an RF circuit 864. The RF circuit 864 may include, for example, a mixer, a filter and an amplifier, and transmits and receives wireless signals via the antenna 840. The radio communication interface 863 may include multiple RF circuits 864, as illustrated in Figure 22. For example, the multiple RF circuits 864 may support multiple antenna elements. Although Figure 22 illustrates the example in which the radio communication interface 863 includes multiple RF circuits 864, the radio communication interface 863 may include a single RF circuit 864.

In the eNB 830 illustrated in Figure 22, the communication unit 102 and the transceiver of the electronic apparatus 100 may be implemented by the radio communication interface 855 and/or the radio communication interface 863. At least a part of functions may be implemented by the controller 851. For example, the controller 851 can transmit the configuration information for OAM mode scanning by performing functions of the generation unit 101 and the communication unit 102, and further to perform OAM mode scanning, thereby selecting an OAM beam with the best communication quality for data transmission.

[Application Examples Regarding User Equipment]

(First Application Example)

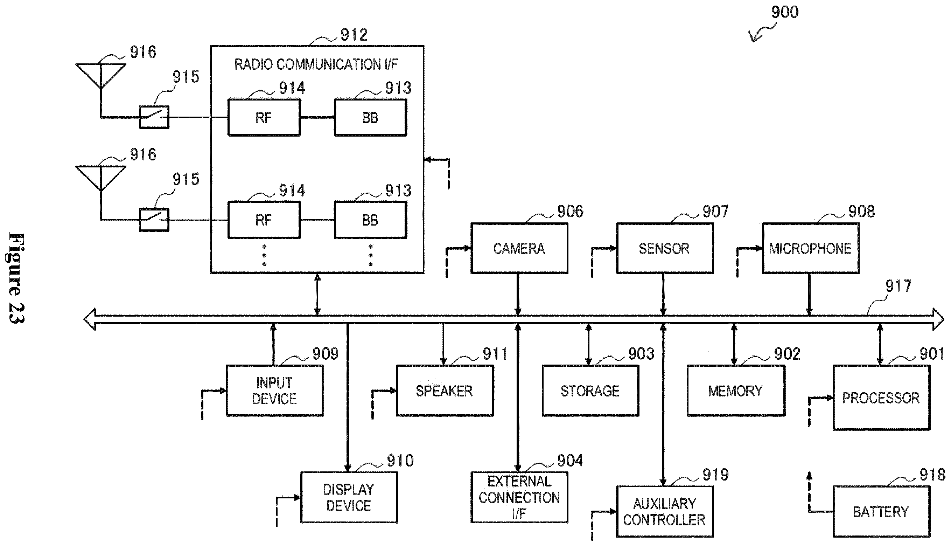

Figure 23 is a block diagram illustrating an exemplary configuration of a smartphone 900 to which the technology according to the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes a RAM and a ROM, and stores a program executed by the processor 901 and data. The storage 903 may include a storage medium such as a semiconductor memory and a hard disk. The external connection interface 904 is an interface for connecting an external device (such as a memory card and a universal serial bus (USB) device) to the smartphone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetism sensor, and an acceleration sensor. The microphone 908 converts sounds inputted to the smartphone 900 to audio signals. The input device 909 includes, for example, a touch sensor configured to detect touch onto a screen of the display device 910, a keypad, a keyboard, a button, or a switch, and receives an operation or information inputted from a user. The display device 910 includes a screen (such as a liquid crystal display (LCD) and an organic light-emitting diode (OLED) display), and displays an output image of the smartphone 900. The speaker 911 converts audio signals outputted from the smartphone 900 to sounds.

The radio communication interface 912 supports any cellular communication scheme (such as LTE and LTE-advanced), and performs wireless communications. The radio communication interface 912 may include, for example, a BB processor 913 and an RF circuit 914. The BB processor 913 may perform, for example, encoding/decoding, modulating/demodulating, and multiplexing/de-multiplexing, and perform various types of signal processing for wireless communication. The RF circuit 914 may include, for example, a mixer, a filter and an amplifier, and transmits and receives wireless signals via the antenna 916. It should be noted that although Figure 23 illustrates a case that one RF link is connected to one antenna, which is only illustrative, and a situation where one RF link is connected to multiple antennas through multiple phase shifters is also possible. The radio communication interface 912 may be a chip module having the BB processor 913 and the RF circuit 914 integrated thereon. The radio communication interface 912 may include multiple BB processors 913 and multiple RF circuits 914, as illustrated in Figure 23. Although Figure 23 illustrates the example in which the radio communication interface 912 includes multiple BB processors 913 and multiple RF circuits 914, the radio communication interface 912 may include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a wireless local area network (LAN) scheme. In this case, the radio communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennas 916 includes a single or multiple antenna elements (such as multiple antenna elements included in an MIMO antenna) and is used for the radio communication interface 912 to transmit and receive wireless signals. The smartphone 900 may include the multiple antennas 916, as illustrated in Figure 23. Although Figure 23 illustrates the example in which the smartphone 900 includes multiple antennas 916, the smartphone 900 may include a single antenna 916.

Furthermore, the smartphone 900 may include the antenna 916 for each wireless communication scheme. In this case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smartphone 900 illustrated in Figure 23 via feeder lines, which are partially illustrated as dashed lines in Figure 23. The auxiliary controller 919 operates a minimum necessary function of the smartphone 900, for example, in a sleep mode.

In the smartphone 900 illustrated in Figure 23, the transceiving unit 201 and the transceiver of the electronic apparatus 200 may be implemented by the radio communication interface 912. At least a part of functions may be implemented by the processor 901 or the auxiliary controller 919. For example, the processor 901 or the auxiliary controller 919 can receive the configuration information for OAM mode scanning by performing functions of the transceiving unit 201 and the execution unit 202, and further to perform OAM mode scanning, thereby enabling the base station to select an OAM beam with the best communication quality for data transmission.

(Second Application Example)

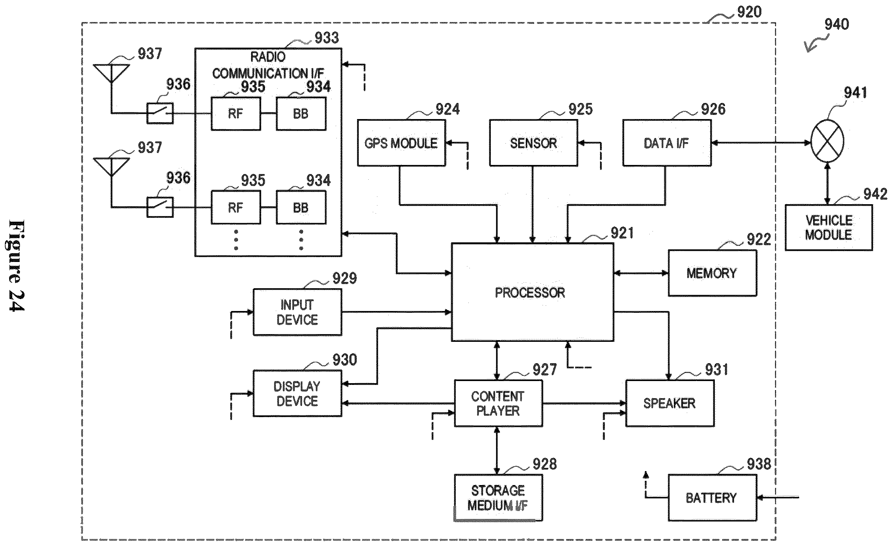

Figure 24 is a block diagram illustrating an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example a CPU or a SoC, and controls a navigation function and additional function of the car navigation apparatus 920. The memory 922 includes RAM and ROM, and stores a program executed by the processor 921, and data.

The GPS module 924 determines a position (such as latitude, longitude and altitude) of the car navigation apparatus 920 by using GPS signals received from a GPS satellite. The sensor 925 may include a group of sensors such as a gyro sensor, a geomagnetic sensor and an air pressure sensor. The data interface 926 is connected to, for example, an in-vehicle network 941 via a terminal that is not illustrated, and acquires data (such as vehicle speed data) generated by the vehicle.

The content player 927 reproduces content stored in a storage medium (such as a CD and DVD) that is inserted into the storage medium interface 928. The input device 929 includes, for example, a touch sensor configured to detect touch onto a screen of the display device 930, a button, or a switch, and receives an operation or information inputted from a user. The display device 930 includes a screen such as an LCD or OLED display, and displays an image of the navigation function or reproduced content. The speaker 931 outputs a sound for the navigation function or the reproduced content.

The radio communication interface 933 supports any cellular communication scheme (such as LTE and LTE-Advanced), and performs wireless communication. The radio communication interface 933 may typically include, for example, a BB processor 934 and an RF circuit 935. The BB processor 934 may perform, for example, encoding/decoding, modulating/demodulating and multiplexing/demultiplexing, and perform various types of signal processing for wireless communication. The RF circuit 935 may include, for example, a mixer, a filter and an amplifier, and transmits and receives wireless signals via the antenna 937. The radio communication interface 933 may also be a chip module having the BB processor 934 and the RF circuit 935 integrated thereon. The radio communication interface 933 may include multiple BB processors 934 and multiple RF circuits 935, as illustrated in Figure 24. Although Figure 24 illustrates the example in which the radio communication interface 933 includes multiple BB processors 934 and multiple RF circuits 935, the radio communication interface 933 may include a single BB processor 934 and a single RF circuit 935.

Furthermore, in addition to a cellular communication scheme, the radio communication interface 933 may support another type of wireless communication scheme such as a short-distance wireless communication scheme, a near field communication scheme, and a wireless LAN scheme. In this case, the radio communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication interface 933.

Each of the antennas 937 includes a single or multiple antenna elements (such as multiple antenna elements included in an MIMO antenna), and is used for the radio communication interface 933 to transmit and receive wireless signals. As illustrated in Figure 24, the car navigation apparatus 920 may include multiple antennas 937. Although Figure 24 illustrates the example in which the car navigation apparatus 920 includes multiple antennas 937, the car navigation apparatus 920 may include a single antenna 937.

Furthermore, the car navigation apparatus 920 may include the antenna 937 for each wireless communication scheme. In this case, the antenna switches 936 may be omitted from the configuration of the car navigation apparatus 920.

The battery 938 supplies power to the blocks of the car navigation apparatus 920 illustrated in Figure 24 via feeder lines that are partially illustrated as dash lines in Figure 24. The battery 938 accumulates power supplied from the vehicle.

In the car navigation device 920 illustrated in Figure 24, the transceiving unit 201 and the transceiver of the electronic apparatus 200 may be implemented by the radio communication interface 933. At least a part of functions may be implemented by the processor 921. For example, the processor 921 can receive the configuration information for OAM mode scanning by performing functions of the transceiving unit 201 and the execution unit 202, and further to perform OAM mode scanning, thereby enabling the base station to select an OAM beam with the best communication quality for data transmission.

The technology according to the present disclosure may also be implemented as an in-vehicle system (or a vehicle) 940 including one or more blocks of the car navigation device 920, the in-vehicle network 941, and a vehicle module 942. The vehicle module 942 generates vehicle data (such as vehicle speed, engine speed, and failure information), and outputs the generated data to the in-vehicle network 941.

The basic principle of the present disclosure has been described above in conjunction with particular embodiments. However, as can be appreciated by those ordinarily skilled in the art, all or any of the steps or components of the method and apparatus according to the disclosure can be implemented with hardware, firmware, software or a combination thereof in any computing device (including a processor, a storage medium, etc.) or a network of computing devices by those ordinarily skilled in the art in light of the disclosure of the disclosure and making use of their general circuit designing knowledge or general programming skills.

Moreover, the present disclosure further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present disclosure. The memory medium includes but is not limited to soft disc, optical disc, magnetic optical disc, memory card, memory stick and the like.

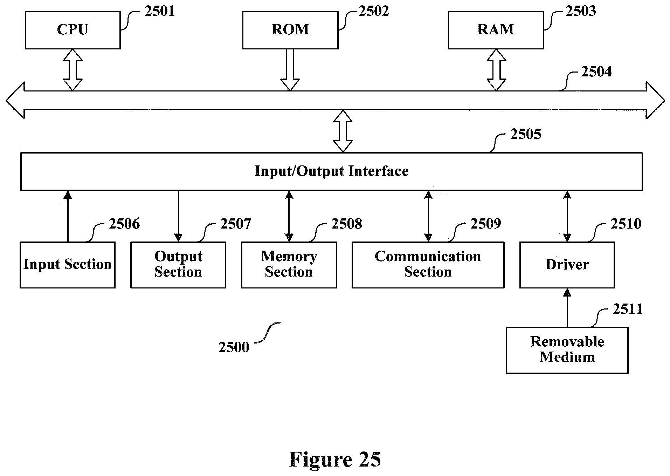

In the case where the present disclosure is realized with software or firmware, a program constituting the software is installed in a computer with a dedicated hardware structure (e.g. the general computer 2500 shown in Figure 25) from a storage medium or network, wherein the computer is capable of implementing various functions when installed with various programs.

In Figure 25, a central processing unit (CPU) 2501 executes various processing according to a program stored in a read-only memory (ROM) 2502 or a program loaded to a random access memory (RAM) 2503 from a memory section 2508. The data needed for the various processing of the CPU 2501 may be stored in the RAM 2503 as needed. The CPU 2501, the ROM 2502 and the RAM 2503 are linked with each other via a bus 2504. An input/output interface 2505 is also linked to the bus 2504.

The following components are linked to the input/output interface 2505: an input section 2506 (including keyboard, mouse and the like), an output section 2507 (including displays such as a cathode ray tube (CRT), a liquid crystal display (LCD), a loudspeaker and the like), a memory section 2508 (including hard disc and the like), and a communication section 2509 (including a network interface card such as a LAN card, modem and the like). The communication section 2509 performs communication processing via a network such as the Internet. A driver 2510 may also be linked to the input/output interface 2505, if needed. If needed, a removable medium 2511, for example, a magnetic disc, an optical disc, a magnetic optical disc, a semiconductor memory and the like, may be installed in the driver 2510, so that the computer program read therefrom is installed in the memory section 2508 as appropriate.

In the case where the foregoing series of processing is achieved through software, programs forming the software are installed from a network such as the Internet or a memory medium such as the removable medium 2511.

It should be appreciated by those skilled in the art that the memory medium is not limited to the removable medium 2511 shown in Figure 25, which has program stored therein and is distributed separately from the apparatus so as to provide the programs to users. The removable medium 2511 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 2502 and the memory section 2508 in which programs are stored, and can be distributed to users along with the device in which they are incorporated.

To be further noted, in the apparatus, method and system according to the present disclosure, the respective components or steps can be decomposed and/or recombined. These decompositions and/or re-combinations shall be regarded as equivalent solutions of the disclosure. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ...... " in which an element is defined will not preclude presence of an additional identical element(s) in a process, method, article or device comprising the defined element(s)" unless further defined.

Although the embodiments of the present disclosure have been described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

## Claims

1. An electronic apparatus for wireless communications, comprising:
   processing circuitry, configured to:

   generate configuration information for orbital angular momentum mode scanning, wherein the configuration information comprises resource configuration information for a mode reference signal for the orbital angular momentum mode scanning and reporting configuration information for configuring reporting of channel status information; and
   transmit the configuration information to user equipment (UE).

2. The electronic apparatus according to claim 1, wherein the processing circuitry is further configured to transmit the mode reference signal and receive the channel status information based on the configuration information, wherein the mode reference signal is carried by a beam with a corresponding orbital angular momentum mode, and a resource type configured for the mode reference signal is one of being: periodical, semi-persistent, and aperiodical.

3. The electronic apparatus according to claim 1, wherein the channel status information to be reported comprises:

   one or more orbital angular momentum beam resource indicators, wherein each of the one or more orbital angular momentum beam resource indicators represents resources of a mode reference signal corresponding to one orbital angular momentum mode in one beam direction; or
   one or more extended channel status information reference signal resource indicators (CRIs), wherein, each of the extended CRIs comprises a channel status information reference signal resource indicator and an orbital angular momentum mode index.

4. The electronic apparatus according to claim 3, wherein the channel status information to be reported further comprises information of beam quality of a beam corresponding to the one or more orbital angular momentum beam resource indicators or the one or more extended CRIs measured by the user equipment.

5. The electronic apparatus according to claim 4, wherein the beam quality is represented by a reference signal receiving power or a signal to interference and noise ratio.

6. The electronic apparatus according to claim 2, wherein the processing circuitry is configured to transmit the mode reference signal in one of following manners:

   single mode scanning, wherein mode reference signals of different orbital angular momentum modes are transmitted sequentially;
   multi-mode scanning, wherein mode reference signals of respective orbital angular momentum modes are transmitted simultaneously; and
   mixed scanning, wherein mode reference signals of a part of the orbital angular momentum modes are transmitted sequentially in a manner of single-mode scanning, and mode reference signals of remaining orbital angular momentum modes are transmitted simultaneously in a manner of multi-mode scanning.

7. The electronic apparatus according to claim 6, wherein in the mixed scanning, mode reference signals of high orbital angular momentum modes among respective orbital angular momentum modes are transmitted in a manner of single-mode scanning, and mode reference signals of low orbital angular momentum modes among respective orbital angular momentum modes are transmitted in a manner of multi-mode scanning, wherein the high orbital angular momentum mode and the low orbital angular momentum mode are determined according to a predetermined rule.

8. The electronic apparatus according to claim 7, wherein the predetermined rule comprises: determining whether an orbital angular momentum mode is the high orbital angular momentum mode or the low orbital angular momentum mode based on whether an absolute value of the mode is higher than a predetermined threshold, or determining the number of the high orbital angular momentum modes or the number of the low orbital angular momentum modes according to a predetermined condition.

9. The electronic apparatus according to claim 6, wherein the configuration information further comprises an indication of a manner of transmitting the mode reference signal.

10. The electronic apparatus according to claim 2, wherein the processing circuitry is further configured to perform wide-beam scanning using a synchronized signal block (SSB) to determine a target beam direction range, or perform the wide-beam scanning using the SSB and perform narrow-beam scanning using a channel status information reference signal to determine the target beam direction range, and perform the orbital angular momentum mode scanning within the target beam direction range.

11. The electronic apparatus according to claim 10, wherein the processing circuitry is configured to:

acquire an synchronized signal block index of a beam with the best beam quality from the user equipment, and perform orbital angular momentum mode scanning in a plurality of beam directions within a range of a synchronized signal block beam corresponding to the synchronized signal block index; or
acquire, from the user equipment, an synchronized signal block index of a beam with the best beam quality, determine a plurality of channel status information reference signal beams within a range of a synchronized signal block beam corresponding to the synchronized signal block index, perform narrow-beam scanning using the plurality of channel status information reference signal beams, acquire a channel status information reference signal index of the beam with the best beam quality, perform orbital angular momentum mode scanning in a direction of a channel status information reference signal beam corresponding to the channel status information reference signal index.

12. The electronic apparatus according to claim 1, wherein the processing circuitry is configured to configure same time-frequency resources for the mode reference signals of different orbital angular momentum modes in a same beam direction, and configure orthogonal time-frequency resources for mode reference signals in different beam directions.

13. The electronic apparatus according to claim 1, wherein the processing circuitry is configured to enable the mode reference signal to reuse the time-frequency resources of the channel status information reference signal.

14. The electronic apparatus according to claim 13, wherein the processing circuitry is configured to apply different resource multiplexing manners to the mode reference signal and the channel status information reference signal.

15. The electronic apparatus according to claim 13, wherein the processing circuitry is configured to define an antenna port of the mode reference signal as including a primary antenna port and a secondary antenna port, wherein the primary antenna port is configured to indicate a beam direction of the mode reference signal, and the secondary antenna port is configured to indicate an orbital angular momentum mode of a beam corresponding to the mode reference signal.

16. The electronic apparatus according to claim 1, wherein the processing circuitry is configured to configure time-frequency resources orthogonal to the time-frequency resources of the channel status information reference signal for the mode reference signal.

17. The electronic apparatus according to claim 16, wherein the processing circuitry is configured to configure one antenna port for a mode reference signal of each orbital angular momentum mode in each beam direction.

18. The electronic apparatus according to claim 1, wherein the processing circuitry is further configured to acquire, from the user equipment, information of capability of the user equipment being capable of simultaneously receiving beams of different orbital angular momentum modes.

19. The electronic apparatus according to claim 2, wherein the processing circuitry is further configured to determine one or more orbital angular momentum beams to be used for data transmission based on the channel status information, and provide an indication of the determined one or more orbital angular momentum beams to the user equipment.

20. An electronic apparatus for wireless communications, comprising:
   processing circuitry, configured to:

   receive configuration information for orbital angular momentum mode scanning, the configuration information comprising resource configuration information for a mode reference signal for the orbital angular momentum mode scanning and reporting configuration information for configuring reporting of channel status information; and

   measure a beam corresponding to the mode reference signal and report the channel status information, based on the configuration information.

21. The electronic apparatus according to claim 20, wherein a resource type configured for the mode reference signal is one of being: periodical, semi-persistent, and aperiodical.

22. The electronic apparatus according to claim 20, wherein the reported channel status information comprises:

   one or more orbital angular momentum beam resource indicators, wherein each of the one or more orbital angular momentum beam resource indicators represents resources of a mode reference signal corresponding to one orbital angular momentum mode in one beam direction; or

   one or more extended channel status information reference signal resource indicators (CRIs), wherein, each of the extended CRIs comprises a channel status information reference signal resource indicator and an orbital angular momentum mode index.

23. The electronic apparatus according to claim 22, wherein the reported channel status information further comprises: measured information of beam quality of a beam corresponding to the one or more orbital angular momentum beam resource indicators or the one or more extended CRIs.

24. The electronic apparatus according to claim 23, wherein the beam quality is represented by a reference signal receiving power or a signal to interference and noise ratio.

25. The electronic apparatus according to claim 20, wherein the configuration information further comprises an indication of a manner of transmitting the mode reference signal, and the manner of transmitting comprises one of:

   single mode scanning, wherein mode reference signals of different orbital angular momentum modes are transmitted sequentially;

   multi-mode scanning, wherein mode reference signals of respective orbital angular momentum modes are transmitted simultaneously; and

   mixed scanning, wherein mode reference signals of a part of the orbital angular momentum modes are transmitted sequentially in a manner of the single-mode scanning, and mode reference signals of remaining orbital angular momentum modes are transmitted simultaneously in a manner of the multi-mode scanning.

26. The electronic apparatus according to claim 20, wherein the processing circuit is configured to, in a case that the base station transmits the mode reference signals of a plurality of orbital angular momentum modes in a manner of the multi-mode scanning in which the mode reference signals are transmitted simultaneously, perform demultiplexing on a received beam and measure a beam corresponding to the mode reference signal for each orbital angular momentum mode.

27. The electronic apparatus according to claim 20, wherein mode reference signals of different orbital angular momentum modes in a same beam direction are configured to occupy same time-frequency resources, and mode reference signals in different beam directions are configured to occupy time-frequency resources orthogonal to each other.

28. The electronic apparatus according to claim 20, wherein the mode reference signal reuses the time-frequency resources of the channel status information reference signal.

29. The electronic apparatus according to claim 28, wherein different resource multiplexing manners are applied to the mode reference signal and the channel status information reference signal.

30. The electronic apparatus according to claim 20, wherein the mode reference signal occupies time-frequency resources orthogonal to the time-frequency resources of the channel state information reference signal.

31. The electronic apparatus according to claim 20, wherein the processing circuitry is further configured to report, to the base station, information of capability of the user equipment being capable of simultaneously receiving beams of different orbital angular momentum modes.

32. The electronic apparatus according to claim 20, wherein the processing circuitry is further configured to acquire, from the base station, an indication of one or more orbital angular momentum beams to be used for data transmission.

33. The electronic apparatus according to claim 20, wherein the electronic apparatus is located in first user equipment of D2D communication, and the beam corresponding to the mode reference signal is transmitted by second user equipment other than the first user equipment in the D2D communication.

34. The electronic apparatus according to claim 20, wherein the electronic apparatus is located in a vehicle, and the processing circuitry is configured to communicate with a base station and another vehicle using beams with different orbital angular momentum modes respectively.

35. A method for wireless communications, comprising:

   generating configuration information for orbital angular momentum mode scanning, the configuration information comprising resource configuration information for a mode reference signal for the orbital angular momentum mode scanning and reporting configuration information for configuring reporting of channel status information; and
   transmitting the configuration information to user equipment.

36. A method for wireless communications, comprising:

   receiving configuration information for orbital angular momentum mode scanning, the configuration information comprising resource configuration information for a mode reference signal for the orbital angular momentum mode scanning and reporting configuration information for configuring reporting of channel status information; and
   measuring a beam corresponding to the mode reference signal and reporting the channel status information, based on the configuration information.

37. A computer-readable storage medium having computer-executable instructions stored thereon, which when executed, cause the method for wireless communications according to claim 35 or 36 to be performed.

Figure 1

Figure 2

**Figure 3**

**Figure 4**

**Figure 5**

**Figure 6**

Start

Base station performs beam scanning in an OAM mode i (an initial value of i being N)

UE measures a channel status based on a mode reference signal and reports the channel status to the base station

i=i-1

No ← i<N-L+1?

Yes

Base station simultaneously generates a multi-mode beam including modes 0 to (N-L) and performs beam scanning

UE measures a channel status based on a mode reference signal and reports the channel status to the base station

Base station selects an OAM beam at the transmitting end based on the reported channel status information, and indicates it to the UE

UE selects an OAM beam at the receiving end based on the indication

End

Figure 7

Emitting beams in space

1
2
3
4
5
6
N
...

SSB indications (corresponding to respective beams)

Emitting beams at different time instants

Figure 8

SSB

Single mode OAM beam

Figure 9

**Figure 10**

**Figure 11**

Base station | UE

```
┌─────────────────────────┐                    ┌─────────────────────────┐
│  Performing wide-beam    │ ─────────────────→ │    Measuring signal     │
│  scanning using an SSB   │                    │ characteristics of      │
│                          │                    │     received SSB        │
└─────────────────────────┘                    └─────────────────────────┘
```

Reporting SSB information

```
┌─────────────────────────┐                    ┌─────────────────────────┐
│ Selecting an SSB, and    │                    │    Measuring signal     │
│ performing narrow-beam   │ ─────────────────→ │ characteristics of      │
│ scanning within a beam   │                    │   received CSI-RS       │
│ direction range of the   │                    │                         │
│ SSB using CSI-RS         │                    │                         │
└─────────────────────────┘                    └─────────────────────────┘
```

Measuring signal characteristics
of received CSI-RS

```
┌─────────────────────────┐                    ┌─────────────────────────┐
│ Determining a target     │                    │    Measuring signal     │
│ beam direction range and │ ─────────────────→ │ characteristics of      │
│ performing OAM mode      │                    │ received mode reference │
│ scanning within the      │                    │      signals            │
│ target beam direction    │                    │                         │
│ range                    │                    │                         │
└─────────────────────────┘                    └─────────────────────────┘
```

Reporting channel status information

```
┌─────────────────────────┐                    ┌─────────────────────────┐
│  Determining an OAM      │ ─────────────────→ │   Selecting a receiving │
│  beam for transmitting   │                    │      OAM beam           │
│                          │ Indicating the     │                         │
│                          │   OAM beam         │                         │
└─────────────────────────┘                    └─────────────────────────┘
```

## Figure 12

## Figure 13

CSI-RS
(mode is 0)

Single mode
OAM beam

**Figure 14**

CSI-RS
(mode is 0)

Multi-mode
OAM beam

**Figure 15**

**Figure 16**

**Figure 17**

200

| Transceiving unit 201 | Execution unit 202 |

Figure 18

Start

Generating configuration information for OAM mode scanning — S11

Transmitting the configuration information to UE — S12

Transmitting the mode reference signal and receiving the channel status information based on the configuration information — S13

Determining one or more OAM beams to be used for data transmission based on the channel status information — S14

Providing an indication of the determined one or more OAM beams to the UE — S15

End

Figure 19

Start

Receiving configuration information for OAM mode scanning    S21

Performing measuring and reporting based on the configuration information    S22

Acquiring, from the base station, an indication of the determined one or more OAM beams    S23

End

**Figure 20**

800

810 810 820

825

RADIO COMMUNICATION I/F

827 826

RF BB

827 826

RF BB

⋮ ⋮

821

CONTROLLER

824

823 822

NETWORK I/F MEMORY

Figure 21

**Figure 22**

Figure 23

Figure 24

| CPU 2501 | ROM 2502 | RAM 2503 |
|---|---|---|

2504

Input/Output Interface 2505

| Input Section 2506 | Output Section 2507 | Memory Section 2508 | Communication Section 2509 | Driver 2510 |
|---|---|---|---|---|

2500

Removable Medium 2511

**Figure 25**

<div style="text-align: center;">

**INTERNATIONAL SEARCH REPORT**

</div>

| International application No. |
|---|
| **PCT/CN2022/072015** |

| A. | CLASSIFICATION OF SUBJECT MATTER |
|---|---|

H04W 16/28(2009.01)i

According to International Patent Classification (IPC) or to both national classification and IPC

| B. | FIELDS SEARCHED |
|---|---|

Minimum documentation searched (classification system followed by classification symbols)

H04W; H04B; H04J

Documentation searched other than minimum documentation to the extent that such documents are included in the fields searched

Electronic data base consulted during the international search (name of data base and, where practicable, search terms used)

CNKI, CNPAT, WPI, EPODOC: 轨道, 角, 动量, 复用, 参考, 信号, 波束, 资源, 配置, 报告, 信道状态信息, orbital, angular, momentum, OAM, multiplex, reference, signal, beam, resource, configuration, report, CSI

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2018227031 A1 (SAMSUNG ELECTRONICS CO., LTD.) 09 August 2018 (2018-08-09) claims 1-20 | 1-37 |
| Y | US 2020127729 A1 (HUAWEI TECHNOLOGIES CO., LTD.) 23 April 2020 (2020-04-23) claims 1 and 2 | 1-37 |
| A | WO 2019059408 A1 (NIPPON TELEGRAPH AND TELEPHONE CORPORATION) 28 March 2019 (2019-03-28) entire document | 1-37 |
| A | JP 2019083475 A (NIPPON TELEGRAPH AND TELEPHONE CORPORATION) 30 May 2019 (2019-05-30) entire document | 1-37 |
| A | WO 2020262743 A1 (LG ELECTRONICS INC.) 30 December 2020 (2020-12-30) entire document | 1-37 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 February 2022** | **07 March 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

| International application No. |
| --- |
| **PCT/CN2022/072015** |

| Patent document cited in search report | | | Publication date (day/month/year) | Patent family member(s) | | | Publication date (day/month/year) |
| --- | --- | --- | --- | --- | --- | --- | --- |
| US | 2018227031 | A1 | 09 August 2018 | KR | 20190107176 | A | 18 September 2019 |
|  |  |  |  | EP | 3560232 | A1 | 30 October 2019 |
|  |  |  |  | WO | 2018147665 | A1 | 16 August 2018 |
|  |  |  |  | CN | 110268738 | A | 20 September 2019 |
|  |  |  |  | US | 2020212981 | A1 | 02 July 2020 |
| US | 2020127729 | A1 | 23 April 2020 | CN | 112930667 | A | 08 June 2021 |
|  |  |  |  | WO | 2020078473 | A1 | 23 April 2020 |
|  |  |  |  | EP | 3857835 | A1 | 04 August 2021 |
| WO | 2019059408 | A1 | 28 March 2019 | CN | 111133698 | A | 08 May 2020 |
|  |  |  |  | EP | 3691153 | A1 | 05 August 2020 |
|  |  |  |  | US | 2020296599 | A1 | 17 September 2020 |
| JP | 2019083475 | A | 30 May 2019 | None | | | |
| WO | 2020262743 | A1 | 30 December 2020 | None | | | |

Form PCT/ISA/210 (patent family annex) (January 2015)

**REFERENCES CITED IN THE DESCRIPTION**

**Patent documents cited in the description**

- CN 202110074812